# EUROPEAN PATENT APPLICATION

(11) **EP 4 185 056 A1**
(43) Date of publication of application: **24.05.2023**
(21) Application number: 20948849.3
(22) Date of filing: 06.08.2020
(51) Int. Cl.: H04W 72/12

(54) **INFORMATION TRANSMISSION METHOD, COMMUNICATION APPARATUS AND STORAGE MEDIUM**

(71) Applicant: Huawei Technologies Co., Ltd., Shenzhen, Guangdong 518129 (CN)
(72) Inventor: ZHU, Peng, Shenzhen, Guangdong 518129 (CN); TANG, Xun, Shenzhen, Guangdong 518129 (CN); ZHANG, Liangliang, Shenzhen, Guangdong 518129 (CN)
(74) Representative: Goddar, Heinz J.
(86) International application number: PCT/CN2020/107574
(87) International publication number: WO 2022/027519

(57) **Abstract**

This application discloses an information transmission method, a communication apparatus, and a storage medium, and relates to the field of communication. The method includes: A terminal receives capability enquiry signaling from a network device; and sends capability information of the terminal to the network device, where the capability information includes: a first capability item and dual active protocol stack DAPS capability information supported by the terminal and corresponding to the first capability item, and/or a second capability item and carrier aggregation CA capability information supported by the terminal and corresponding to the second capability item. In the method, the DAPS capability information supported by the terminal is reported to the network device by using the first capability item, and/or the CA capability information supported by the terminal is reported to the network device by using the second capability item, so that the DAPS capability information and the CA capability information that are supported by the terminal can be separately reported, so that both the CA capability information and the DAPS capability information can be reported to the network device when the DAPS capability information is the same as or different from the CA capability information.

## Description

### TECHNICAL FIELD

Embodiments of this application relate to the field of communication technologies, and in particular, to an information transmission method, a communication apparatus, and a storage medium.

### BACKGROUND

A concept of a dual active protocol stack (dual active protocol stack, DAPS) handover is introduced in 5^{th} generation (5^{th} generation, 5G) mobile communication standard R16. The DAPS handover means that, in a process of a handover from a source cell to a target cell, user equipment (user equipment, UE) maintains a connection to both the source cell and the target cell to which the user equipment is to be handed over, and does not release a link to the source cell until a link with the target cell is successfully established. Through the DAPS handover, an interruption time caused by a UE handover process can be reduced, and reliability of a UE handover and can be improved.

Before initiating the DAPS handover, a network device (for example, a source base station corresponding to the source cell) needs to obtain DAPS capability information supported by the UE. Currently, a main direction of 3^{rd} generation partnership project (3^{rd} generation partnership project, 3GPP) standards is to report the DAPS capability information supported by the UE by reusing a structure of a band combination included in radio frequency parameters (radio frequency parameters, RF-Parameters) of the UE when capability information of the UE is reported. For example, parameter information of the source cell and the target cell in the DAPS handover may be reported by using feature Set Combination that Band Combination->feature Set Combination ID corresponds to, and parameter information when the UE establishes a connection to both the source cell and the target cell may be reported by using Band Combination->caParametersNR and Band Combination->bandlist->band.

In the foregoing manner of reporting the DAPS capability information by reusing the structure of the band combination, the structure of the band combination is originally for reporting carrier aggregation (carrier aggregation, CA) capability information. When the DAPS capability information is reported by reusing the structure of the band combination, the DAPS capability information to be reported needs to be the same as the CA capability information. However, actually, the DAPS capability information may be different from the CA capability information, and DAPS capability information different from the CA capability information cannot be reported by using the manner of reporting the DAPS capability information by reusing the structure of the band combination.

### SUMMARY

Embodiments of this application provide an information transmission method, a communication apparatus, and a storage medium, which can meet a requirement for reporting DAPS capability information when the DAPS capability information is different from CA capability information.

According to a first aspect, an embodiment of this application provides an information transmission method. The method includes: A terminal receives capability enquiry signaling from a network device; and the terminal sends capability information of the terminal to the network device. The capability information includes: a first capability item and dual active protocol stack DAPS capability information supported by the terminal and corresponding to the first capability item, and/or a second capability item and carrier aggregation CA capability information supported by the terminal and corresponding to the second capability item.

In the information transmission method, the capability information of the terminal sent by the terminal to the network device after receiving the capability enquiry signaling from the network device includes: the first capability item and the dual active protocol stack DAPS capability information supported by the terminal and corresponding to the first capability item, and the second capability item and the carrier aggregation CA capability information supported by the terminal and corresponding to the second capability item, so that the DAPS capability information and the CA capability information that are supported by the terminal can be separately reported. Compared with the current technology, decoupling between the DAPS capability information and the CA capability information that are supported by the terminal is implemented, so that both the CA capability information and the DAPS capability information can be reported to the network device when the DAPS capability information is the same as or different from the CA capability information.

In a possible design, the capability information includes a specific parameter of each band in multiple band combinations; the DAPS capability information supported by the terminal and corresponding to the first capability item is a specific parameter of each band in one band combination of the multiple band combinations; and/or the CA capability information supported by the terminal and corresponding to the second capability item is a specific parameter of each band in one band combination of the multiple band combinations.

In a possible design, when the DAPS capability information supported by the terminal is different from the CA capability information supported by the terminal, the first capability item and the second capability item correspond to a specific parameter of each band in different band combinations.

In this design, when the DAPS capability information supported by the terminal is different from the CA capability information supported by the terminal, the first capability item and the second capability item may respectively correspond to the specific parameter of each band in different band combinations, to implement reporting of the DAPS capability information and the CA capability information.

In another possible design, when the DAPS capability information supported by the terminal is same as the CA capability information supported by the terminal, the first capability item and the second capability item correspond to a specific parameter of each band in a same band combination.

In this design, when the DAPS capability information supported by the terminal is different from the CA capability information supported by the terminal, the first capability item and the second capability item may correspond to the specific parameter of each band in the same band combination, to implement reporting of the DAPS capability information and the CA capability information.

In another possible design, when the DAPS capability information supported by the terminal is the same as the CA capability information supported by the terminal, the first capability item and the second capability item may also correspond to a specific parameter of each band in different band combinations.

In a possible design, the DAPS capability information supported by the terminal and corresponding to the first capability item includes at least one of the following: an uplink DAPS capability and a downlink DAPS capability at a per band granularity, or an uplink DAPS capability and a downlink DAPS capability at a per carrier granularity.

This design can add some DAPS dedicated capability extensions.

According to a second aspect, an embodiment of this application provides a communication apparatus that may be applied to a terminal. The apparatus has a function of implementing the method according to the foregoing first aspect. The function may be implemented by hardware, or may be implemented by hardware executing corresponding software. The hardware or software includes one or more units or modules corresponding to the function of the method according to the foregoing first aspect.

For example, the communication apparatus may include: a receiving module, configured to receive capability enquiry signaling from a network device; and a sending module, configured to send capability information of the terminal to the network device. The capability information includes: a first capability item and dual active protocol stack DAPS capability information supported by the terminal and corresponding to the first capability item, and/or a second capability item and carrier aggregation CA capability information supported by the terminal and corresponding to the second capability item.

In a possible design, the capability information includes a specific parameter of each band in multiple band combinations; the DAPS capability information supported by the terminal and corresponding to the first capability item is a specific parameter of each band in one band combination of the multiple band combinations; and/or the CA capability information supported by the terminal and corresponding to the second capability item is a specific parameter of each band in one band combination of the multiple band combinations.

In a possible design, when the DAPS capability information supported by the terminal is different from the CA capability information supported by the terminal, the first capability item and the second capability item correspond to a specific parameter of each band in different band combinations.

In another possible design, when the DAPS capability information supported by the terminal is same as the CA capability information supported by the terminal, the first capability item and the second capability item correspond to a specific parameter of each band in a same band combination.

In another possible design, when the DAPS capability information supported by the terminal is the same as the CA capability information supported by the terminal, the first capability item and the second capability item may also correspond to a specific parameter of each band in different band combinations.

In a possible design, the DAPS capability information supported by the terminal and corresponding to the first capability item includes at least one of the following: an uplink DAPS capability and a downlink DAPS capability at a per band granularity, or an uplink DAPS capability and a downlink DAPS capability at a per carrier granularity.

According to a third aspect, an embodiment of this application further provides a communication apparatus, including: a processor, configured to execute computer instructions stored in a memory. When the computer instructions are executed, the apparatus is enabled to perform the method according to the first aspect or any one of the possible designs of the first aspect.

According to a fourth aspect, an embodiment of this application further provides a communication apparatus, including: a processor and an interface circuit. The processor is configured to communicate with another apparatus through the interface circuit, and perform the method according to the first aspect or any one of the possible designs of the first aspect.

The communication apparatuses in the second aspect to the fourth aspect may be applied to a terminal.

According to a fifth aspect, an embodiment of this application further provides a computer-readable storage medium, including computer software instructions. When the computer software instructions run in a terminal or a chip built in a terminal, the terminal is enabled to perform the method according to the first aspect.

It may be understood that, for beneficial effects that can be achieved in the second aspect to the fifth aspect, refer to beneficial effects in the first aspect and any one of the possible designs of the first aspect. Details are not described herein again.

According to a sixth aspect, an embodiment of this application provides an information transmission method. The method includes: A network device sends capability enquiry signaling to a terminal; and the network device receives capability information from the terminal. The capability information includes: a first capability item and dual active protocol stack DAPS capability information supported by the terminal and corresponding to the first capability item, and/or a second capability item and CA capability information supported by the terminal and corresponding to the second capability item.

In the information transmission method, the capability information of the terminal sent by the terminal to the network device after receiving the capability enquiry signaling from the network device includes: the first capability item and the dual active protocol stack DAPS capability information supported by the terminal and corresponding to the first capability item, and the second capability item and the carrier aggregation CA capability information supported by the terminal and corresponding to the second capability item, so that the DAPS capability information and the CA capability information that are supported by the terminal can be separately reported. Compared with the current technology, decoupling between the DAPS capability information and the CA capability information that are supported by the terminal is implemented, so that both the CA capability information and the DAPS capability information can be reported to the network device when the DAPS capability information is the same as or different from the CA capability information.

In a possible design, the capability information includes a specific parameter of each band in multiple band combinations; the DAPS capability information supported by the terminal and corresponding to the first capability item is a specific parameter of each band in one band combination of the multiple band combinations; and/or the CA capability information supported by the terminal and corresponding to the second capability item is a specific parameter of each band in one band combination of the multiple band combinations.

In a possible design, when the DAPS capability information supported by the terminal is different from the CA capability information supported by the terminal, the first capability item and the second capability item correspond to a specific parameter of each band in different band combinations.

In this design, when the DAPS capability information supported by the terminal is different from the CA capability information supported by the terminal, the first capability item and the second capability item may respectively correspond to the specific parameter of each band in different band combinations, to implement reporting of the DAPS capability information and the CA capability information.

In another possible design, when the DAPS capability information supported by the terminal is same as the CA capability information supported by the terminal, the first capability item and the second capability item correspond to a specific parameter of each band in a same band combination.

In this design, when the DAPS capability information supported by the terminal is different from the CA capability information supported by the terminal, the first capability item and the second capability item may correspond to the specific parameter of each band in the same band combination, to implement reporting of the DAPS capability information and the CA capability information.

In another possible design, when the DAPS capability information supported by the terminal is the same as the CA capability information supported by the terminal, the first capability item and the second capability item may also correspond to a specific parameter of each band in different band combinations.

In a possible design, the DAPS capability information supported by the terminal and corresponding to the first capability item includes at least one of the following: an uplink DAPS capability and a downlink DAPS capability at a per band granularity, or an uplink DAPS capability and a downlink DAPS capability at a per carrier granularity.

This design can add some DAPS dedicated capability extensions.

According to a seventh aspect, an embodiment of this application provides a communication apparatus that may be applied to a network device. The apparatus has a function of implementing the method according to the foregoing sixth aspect. The function may be implemented by hardware, or may be implemented by hardware executing corresponding software. The hardware or software includes one or more units or modules corresponding to the function of the method according to the foregoing sixth aspect.

For example, the communication apparatus may include: a sending module, configured to send capability enquiry signaling to a terminal; and a receiving module, configured to receive capability information from the terminal. The capability information includes: a first capability item and dual active protocol stack DAPS capability information supported by the terminal and corresponding to the first capability item, and/or a second capability item and CA capability information supported by the terminal and corresponding to the second capability item.

In a possible design, the capability information includes a specific parameter of each band in multiple band combinations; the DAPS capability information supported by the terminal and corresponding to the first capability item is a specific parameter of each band in one band combination of the multiple band combinations; and/or the CA capability information supported by the terminal and corresponding to the second capability item is a specific parameter of each band in one band combination of the multiple band combinations.

In a possible design, when the DAPS capability information supported by the terminal is different from the CA capability information supported by the terminal, the first capability item and the second capability item correspond to a specific parameter of each band in different band combinations.

In another possible design, when the DAPS capability information supported by the terminal is same as the CA capability information supported by the terminal, the first capability item and the second capability item correspond to a specific parameter of each band in a same band combination.

In another possible design, when the DAPS capability information supported by the terminal is the same as the CA capability information supported by the terminal, the first capability item and the second capability item may also correspond to a specific parameter of each band in different band combinations.

In a possible design, the DAPS capability information supported by the terminal and corresponding to the first capability item includes at least one of the following: an uplink DAPS capability and a downlink DAPS capability at a per band granularity, or an uplink DAPS capability and a downlink DAPS capability at a per carrier granularity.

According to an eighth aspect, an embodiment of this application further provides a communication apparatus, including: a processor, configured to execute computer instructions stored in a memory. When the computer instructions are executed, the apparatus is enabled to perform the method according to the sixth aspect or any one of the possible designs of the sixth aspect.

According to a ninth aspect, an embodiment of this application further provides a communication apparatus, including: a processor and an interface circuit. The processor is configured to communicate with another apparatus through the interface circuit, and perform the method according to the sixth aspect or any one of the possible designs of the sixth aspect.

The communication apparatuses in the seventh aspect to the ninth aspect may be applied to a network device, for example, a source base station.

According to a tenth aspect, an embodiment of this application further provides a computer-readable storage medium, including computer software instructions. When the computer software instructions run in a network device or a chip built in a network device, the network device is enabled to perform the method according to the sixth aspect.

It may be understood that, for beneficial effects that can be achieved in the seventh aspect to the tenth aspect, refer to beneficial effects in the sixth aspect and any one of the possible designs of the sixth aspect. Details are not described herein again.

According to an eleventh aspect, an embodiment of this application provides an information transmission method. The method includes: A terminal maintains a link communication with a first cell, and successfully accesses a second cell; the terminal receives a first reconfiguration message from a network device of the second cell; and the terminal releases a configuration of the terminal in the first cell based on the first reconfiguration message.

In the information transmission method, in a DAPS handover process, when the terminal receives the first reconfiguration message sent by the network device of the second cell after maintaining the link communication with the first cell and successfully accessing the second cell, the terminal releases the configuration in the first cell. Therefore, the terminal only needs to retain two sets of configurations: a configuration in the second cell and a configuration in the reconfiguration message sent by the network device of the second cell, and does not need to retain three sets of configurations. In this way, the terminal does not need to reserve memory spaces of the three sets of configurations during a DAPS handover, thereby greatly reducing implementation complexity of the terminal.

In a possible design, the first reconfiguration message is the first reconfiguration message received by the terminal from the network device of the second cell after the terminal successfully accesses the second cell.

In a possible design, the first reconfiguration message includes a source cell configuration release indication, or does not include the source cell configuration release indication.

When the first reconfiguration message includes the source cell configuration release indication, the terminal may release the configuration in the first cell based on the source cell configuration release indication. When the first reconfiguration message does not include the source cell configuration release indication, the terminal may automatically release the configuration in the first cell.

In another possible design, the first reconfiguration message does not include a source cell configuration release indication; and the method further includes: The terminal keeps an existing configuration in the second cell unchanged, and/or sends a reconfiguration error message to the network device of the second cell.

In a possible design, that a terminal maintains a link communication with a first cell, and successfully accesses a second cell includes that: in a DAPS handover process, the terminal receives a handover command from a network device of the first cell; and the terminal maintains the link communication with the first cell based on the handover command, and successfully accesses the second cell.

In a possible design, that the terminal successfully accesses the second cell includes that: the terminal synchronizes with the second cell, and sends a reconfiguration complete message to the network device of the second cell.

According to a twelfth aspect, an embodiment of this application provides a communication apparatus that may be applied to a terminal. The apparatus has a function of implementing the method according to the foregoing eleventh aspect. The function may be implemented by hardware, or may be implemented by hardware executing corresponding software. The hardware or software includes one or more units or modules corresponding to the function of the method according to the foregoing eleventh aspect.

For example, the communication apparatus may include: an access module, configured to maintain a link communication between the terminal and a first cell, and successfully access a second cell; a receiving module, configured to receive a first reconfiguration message from a network device of the second cell; and a release module, configured to release a configuration of the terminal in the first cell based on the first reconfiguration message.

In a possible design, the first reconfiguration message is the first reconfiguration message received by the receiving module from the network device of the second cell after the terminal successfully accesses the second cell.

In a possible design, the first reconfiguration message includes a source cell configuration release indication, or does not include the source cell configuration release indication.

In another possible design, the first reconfiguration message does not include a source cell configuration release indication; and the access module is further configured to keep an existing configuration in the second cell unchanged, and/or send a reconfiguration error message to the network device of the second cell.

In a possible design, in a DAPS handover process, the receiving module is further configured to receive a handover command from a network device of the first cell; and the access module is specifically configured to maintain the link communication between the terminal and the first cell based on the handover command, and successfully access the second cell.

In a possible design, the access module is specifically configured to control the terminal to synchronize with the second cell, and send a reconfiguration complete message to the network device of the second cell.

According to a thirteenth aspect, an embodiment of this application further provides a communication apparatus, including: a processor, configured to execute computer instructions stored in a memory. When the computer instructions are executed, the apparatus is enabled to perform the method according to the eleventh aspect or any one of the possible designs of the eleventh aspect.

According to a fourteenth aspect, an embodiment of this application further provides a communication apparatus, including: a processor and an interface circuit. The processor is configured to communicate with another apparatus through the interface circuit, and perform the method according to the eleventh aspect or any one of the possible designs of the eleventh aspect.

The communication apparatuses in the twelfth aspect to the fourteenth aspect may be applied to a terminal.

According to a fifteenth aspect, an embodiment of this application further provides a computer-readable storage medium, including computer software instructions. When the computer software instructions run in a terminal or a chip built in a terminal, the terminal is enabled to perform the method according to the eleventh aspect.

It may be understood that, for beneficial effects that can be achieved in the twelfth aspect to the fifteenth aspect, refer to beneficial effects in the eleventh aspect and any one of the possible designs of the eleventh aspect. Details are not described herein again.

According to a sixteenth aspect, an embodiment of this application provides an information transmission method. The method includes: After a terminal successfully accesses a second cell, a network device of the second cell sends a first reconfiguration message to the terminal. The first reconfiguration message includes a source cell configuration release indication, the source cell configuration release indication is used for instructing the terminal to release a configuration in a first cell, and the first cell is a cell with which the terminal maintains a link communication.

In the information transmission method, in a DAPS handover process, when the terminal receives the first reconfiguration message sent by the network device of the second cell after maintaining the link communication with the first cell and successfully accessing the second cell, the terminal releases the configuration in the first cell based on the source cell configuration release indication. Therefore, the terminal only needs to retain two sets of configurations: a configuration in the second cell and a configuration in the reconfiguration message sent by the network device of the second cell, and does not need to retain three sets of configurations. In this way, the terminal does not need to reserve memory spaces of the three sets of configurations during a DAPS handover, thereby greatly reducing implementation complexity of the terminal.

In a possible design, the first reconfiguration message is the first reconfiguration message sent by the network device of the second cell to the terminal after the terminal successfully the second cell.

In a possible design, before the network device of the second cell sends the first reconfiguration message to the terminal, the method further includes: The network device of the second cell receives a reconfiguration complete message from the terminal.

In a possible design, that a network device of the second cell sends a first reconfiguration message to the terminal includes that: the network device of the second cell sends the first reconfiguration message to the terminal when sending a handover success indication to a network device of the first cell; or
the network device of the second cell sends the first reconfiguration message to the terminal after sending the handover success indication to the network device of the first cell; or
the network device of the second cell sends the first reconfiguration message to the terminal after receiving an SN status transfer indication from the network device of the first cell; or
the network device of the second cell sends the first reconfiguration message to the terminal after completing data forwarding; or
the network device of the second cell sends the first reconfiguration message to the terminal before sending a path switch request message; or
the network device of the second cell sends the first reconfiguration message to the terminal when sending the path switch request message; or
the network device of the second cell sends the first reconfiguration message to the terminal after sending the path switch request message; or
the network device of the second cell sends the first reconfiguration message to the terminal after receiving an end marker; or
the network device of the second cell sends the first reconfiguration message to the terminal after receiving a path switch request acknowledgment message; or
the network device of the second cell sends the first reconfiguration message to the terminal before sending a terminal context release message to the network device of the first cell.

This design provides multiple occasions on which the network device of the second cell sends the first reconfiguration message to the terminal.

According to a seventeenth aspect, an embodiment of this application provides a communication apparatus. The apparatus has a function of implementing the method according to the foregoing sixteenth aspect. The function may be implemented by hardware, or may be implemented by hardware executing corresponding software. The hardware or software includes one or more units or modules corresponding to the function of the method according to the foregoing sixteenth aspect.

For example, the communication apparatus may include: a sending module, configured to send, after a terminal successfully accesses a second cell, a first reconfiguration message to the terminal. The first reconfiguration message includes a source cell configuration release indication, the source cell configuration release indication is used for instructing the terminal to release a configuration in a first cell, and the first cell is a cell with which the terminal maintains a link communication.

In a possible design, the first reconfiguration message is the first reconfiguration message sent by the sending module to the terminal after the terminal successfully the second cell.

In a possible design, the apparatus further includes: a receiving module, configured to receive a reconfiguration complete message from the terminal.

In a possible design, the sending module is specifically configured to send the first reconfiguration message to the terminal when sending a handover success indication to a network device of the first cell; or
send the first reconfiguration message to the terminal after sending the handover success indication to the network device of the first cell; or
send the first reconfiguration message to the terminal after receiving an SN status transfer indication from the network device of the first cell; or
send the first reconfiguration message to the terminal after completing data forwarding; or
send the first reconfiguration message to the terminal before sending a path switch request message; or
send the first reconfiguration message to the terminal when sending the path switch request message; or
send the first reconfiguration message to the terminal after sending the path switch request message; or
send the first reconfiguration message to the terminal after receiving an end marker; or
send the first reconfiguration message to the terminal after receiving a path switch request acknowledgment message; or
send the first reconfiguration message to the terminal before sending a terminal context release message to the network device of the first cell.

According to an eighteenth aspect, an embodiment of this application further provides a communication apparatus, including: a processor, configured to execute computer instructions stored in a memory. When the computer instructions are executed, the apparatus is enabled to perform the method according to the sixteenth aspect or any one of the possible designs of the sixteenth aspect.

According to a nineteenth aspect, an embodiment of this application further provides a communication apparatus, including: a processor and an interface circuit. The processor is configured to communicate with another apparatus through the interface circuit, and perform the method according to the sixteenth aspect or any one of the possible designs of the sixteenth aspect.

The communication apparatuses in the seventeenth aspect to the nineteenth aspect may be applied to a network device, for example, a target base station.

According to a twentieth aspect, an embodiment of this application further provides a computer-readable storage medium, including computer software instructions. When the computer software instructions run in a network device or a chip built in a network device, the network device is enabled to perform the method according to the sixteenth aspect.

It may be understood that, for beneficial effects that can be achieved in the seventeenth aspect to the twentieth aspect, refer to beneficial effects in the sixteenth aspect and any one of the possible designs of the sixteenth aspect. Details are not described herein again.

According to a twenty-first aspect, an embodiment of this application provides an information transmission method. The method includes: A terminal maintains a link communication with a first cell, and successfully accesses a second cell; the terminal receives a reconfiguration message from a network device of the first cell; and the terminal keeps a configuration in the first cell unchanged, or determines not to perform a reconfiguration based on the reconfiguration message.

In the information transmission method, in a DAPS handover process, when the terminal receives the reconfiguration message sent by the network device of the first cell after maintaining the link communication with the first cell and successfully accessing the second cell, the terminal determines not to perform the reconfiguration based on the reconfiguration message, that is, ignores the reconfiguration message. Therefore, the terminal only needs to retain two sets of configurations: the configuration in the first cell and a configuration in the second cell, and does not need to retain three sets of configurations. In this way, the terminal does not need to reserve memory spaces of the three sets of configurations during a DAPS handover, thereby greatly reducing implementation complexity of the terminal.

In a possible design, the method further includes: The terminal sends a reconfiguration error message to the network device of the first cell.

In a possible design, that a terminal maintains a link communication with a first cell, and successfully accesses a second cell includes that: in a DAPS handover process, the terminal receives a handover command from the network device of the first cell; and the terminal maintains the link communication with the first cell based on the handover command, and successfully accesses the second cell.

In a possible design, that the terminal successfully accesses the second cell includes that: the terminal synchronizes with the second cell, and sends a reconfiguration complete message to a network device of the second cell.

According to a twenty-second aspect, an embodiment of this application provides a communication apparatus that may be applied to a terminal. The apparatus has a function of implementing the method according to the foregoing twenty-first aspect. The function may be implemented by hardware, or may be implemented by hardware executing corresponding software. The hardware or software includes one or more units or modules corresponding to the function of the method according to the foregoing twenty-first aspect.

For example, the communication apparatus may include: an access module, configured to maintain a link communication between the terminal and a first cell, and successfully access a second cell; a receiving module, configured to receive a reconfiguration message from a network device of the first cell; and the access module, further configured to keep a configuration of the terminal in the first cell unchanged, or determine not to perform a reconfiguration based on the reconfiguration message.

In a possible design, the apparatus further includes: a sending module, configured to send a reconfiguration error message to the network device of the first cell.

In a possible design, in a DAPS handover process, the receiving module is further configured to receive a handover command from the network device of the first cell; and the access module is specifically configured to maintain the link communication between the terminal and the first cell based on the handover command, and successfully access the second cell.

In a possible design, the access module is specifically configured to control the terminal to synchronize with the second cell, and send a reconfiguration complete message to a network device of the second cell.

According to a twenty-third aspect, an embodiment of this application further provides a communication apparatus, including: a processor, configured to execute computer instructions stored in a memory. When the computer instructions are executed, the apparatus is enabled to perform the method according to the twenty-first aspect or any one of the possible designs of the twenty-first aspect.

According to a twenty-fourth aspect, an embodiment of this application further provides a communication apparatus, including: a processor and an interface circuit. The processor is configured to communicate with another apparatus through the interface circuit, and perform the method according to the twenty-first aspect or any one of the possible designs of the twenty-first aspect.

The communication apparatuses in the twenty-second aspect to the twenty-fourth aspect may be applied to a terminal.

According to a twenty-fifth aspect, an embodiment of this application further provides a computer-readable storage medium, including computer software instructions. When the computer software instructions run in a terminal or a chip built in a terminal, the terminal is enabled to perform the method according to the twenty-first aspect.

It may be understood that, for beneficial effects that can be achieved in the twenty-second aspect to the twenty-fifth aspect, refer to beneficial effects in the twenty-first aspect and any one of the possible designs of the twenty-first aspect. Details are not described herein again.

According to a twenty-sixth aspect, an embodiment of this application provides an information transmission method. The method includes: After a terminal successfully accesses a second cell, a network device of the second cell sends a source cell configuration release message to the terminal when sending a handover success indication to a network device of a first cell, where the first cell is a cell with which the terminal maintains a link communication; or
the network device of the second cell sends the source cell configuration release message to the terminal after sending the handover success indication to the network device of the first cell; or
the network device of the second cell sends the source cell configuration release message to the terminal after receiving an SN status transfer indication from the network device of the first cell; or
the network device of the second cell sends the source cell configuration release message to the terminal after completing data forwarding; or
the network device of the second cell sends the source cell configuration release message to the terminal before sending a path switch request message; or
the network device of the second cell sends the source cell configuration release message to the terminal when sending the path switch request message; or
the network device of the second cell sends the source cell configuration release message to the terminal after sending the path switch request message; or
the network device of the second cell sends the source cell configuration release message to the terminal after receiving an end marker; or
the network device of the second cell sends the source cell configuration release message to the terminal after receiving a path switch request acknowledgment message; or
the network device of the second cell sends the source cell configuration release message to the terminal before sending a terminal context release message to the network device of the first cell.

The source cell configuration release message is used for instructing the terminal to release a configuration in the first cell.

The method provides multiple earlier occasions on which the network device of the second cell sends the source cell configuration release message to the terminal, so that a subsequent reconfiguration message (a reconfiguration message sent by the network device of the first cell, or a reconfiguration message sent by the network device of the second cell) can be sent more flexibly, and implementation complexity of the terminal can be reduced.

According to a twenty-seventh aspect, an embodiment of this application provides a communication apparatus that may be applied to a network device. The apparatus has a function of implementing the method according to the foregoing twenty-sixth aspect. The function may be implemented by hardware, or may be implemented by hardware executing corresponding software. The hardware or software includes one or more units or modules corresponding to the function of the method according to the foregoing twenty-sixth aspect.

For example, the communication apparatus may include: a sending module, configured to send, after a terminal successfully accesses a second cell, a source cell configuration release message to the terminal when sending a handover success indication to a network device of a first cell, where the first cell is a cell with which the terminal maintains a link communication; or
send the source cell configuration release message to the terminal after sending the handover success indication to the network device of the first cell; or
send the source cell configuration release message to the terminal after receiving an SN status transfer indication from the network device of the first cell; or
send the source cell configuration release message to the terminal after completing data forwarding; or
send the source cell configuration release message to the terminal before sending a path switch request message; or
send the source cell configuration release message to the terminal when sending the path switch request message; or
send the source cell configuration release message to the terminal after sending the path switch request message; or
send the source cell configuration release message to the terminal after receiving an end marker; or
send the source cell configuration release message to the terminal after receiving a path switch request acknowledgment message; or
send the source cell configuration release message to the terminal before sending a terminal context release message to the network device of the first cell.

The source cell configuration release message is used for instructing the terminal to release a configuration in the first cell.

According to a twenty-eighth aspect, an embodiment of this application further provides a communication apparatus, including: a processor, configured to execute computer instructions stored in a memory. When the computer instructions are executed, the apparatus is enabled to perform the method according to the twenty-sixth aspect or any one of the possible designs of the twenty-sixth aspect.

According to a twenty-ninth aspect, an embodiment of this application further provides a communication apparatus, including: a processor and an interface circuit. The processor is configured to communicate with another apparatus through the interface circuit, and perform the method according to the twenty-sixth aspect or any one of the possible designs of the twenty-sixth aspect.

The communication apparatuses in the twenty-seventh aspect to the twenty-ninth aspect may be applied to a network device.

According to a thirtieth aspect, an embodiment of this application further provides a computer-readable storage medium, including computer software instructions. When the computer software instructions run in a network device or a chip built in a network device, the network device is enabled to perform the method according to the twenty-sixth aspect.

It may be understood that, for beneficial effects that can be achieved in the twenty-seventh aspect to the thirtieth aspect, refer to beneficial effects in the twenty-sixth aspect and any one of the possible designs of the twenty-sixth aspect. Details are not described herein again.

According to a thirty-first aspect, an embodiment of this application further provides a communication apparatus, including: a transceiver unit and a processing unit. The transceiver unit may be configured to send and receive information, or configured to communicate with another network element. The processing unit may be configured to process data. For example, the apparatus may implement, through the transceiver unit and the processing unit, the method according to any one of the first aspect, the sixth aspect, the eleventh aspect, the sixteenth aspect, the twenty-first aspect, or the twenty-sixth aspect.

According to a thirty-second aspect, an embodiment of this application further provides a computer program product. The computer program product may implement, when being executed, the method according to any one of the first aspect, the sixth aspect, the eleventh aspect, the sixteenth aspect, the twenty-first aspect, or the twenty-sixth aspect.

According to a thirty-third aspect, an embodiment of this application further provides a chip system. The chip system is applied to a terminal; the chip system includes one or more interface circuits and one or more processors; the interface circuits and the processors are interconnected through lines; and the processors receive and execute computer instructions from a memory of an electronic device through the interface circuits, to implement the method according to any one of the first aspect, the eleventh aspect, or the twenty-first aspect.

According to a thirty-fourth aspect, an embodiment of this application further provides a chip system. The chip system is applied to a network device; the chip system includes one or more interface circuits and one or more processors; the interface circuits and the processors are interconnected through lines; and the processors receive and execute computer instructions from a memory of an electronic device through the interface circuits, to implement the method according to any one of the sixth aspect, the sixteenth aspect, or the twenty-sixth aspect.

It may be understood that, for beneficial effects that can be achieved in the thirty-first aspect to the thirty-fourth aspect, refer to beneficial effects in the first aspect, the sixth aspect, the eleventh aspect, the sixteenth aspect, the twenty-first aspect, and the twenty-sixth aspect. Details are not described herein again.

According to a thirty-fifth aspect, an embodiment of this application further provides a communication system, including a network device and a terminal. The terminal performs the method according to the first aspect, and the network device performs the method according to the sixth aspect.

According to a thirty-sixth aspect, an embodiment of this application further provides a communication system, including a network device and a terminal. The terminal performs the method according to the eleventh aspect, and the network device performs the method according to the sixteenth aspect. Alternatively, the terminal performs the method according to the twenty-first aspect.

It may be understood that, for beneficial effects that can be achieved in the thirty-fifth aspect, refer to beneficial effects in the first aspect and the sixth aspect; and for beneficial effects that can be achieved in the thirty-sixth aspect, refer to beneficial effects in the eleventh aspect, the sixteenth aspect, and the twenty-first aspect. Details are not described herein again.

### BRIEF DESCRIPTION OF DRAWINGS

FIG. 1 is a schematic diagram of a DAPS handover;
FIG. 2 is a schematic flowchart of a UE capability enquiry;
FIG. 3 is a schematic composition diagram of a communication system according to an embodiment of this application;
FIG. 4 is a schematic composition diagram of a network device according to an embodiment of this application;
FIG. 5 is a schematic flowchart of an information transmission method according to an embodiment of this application;

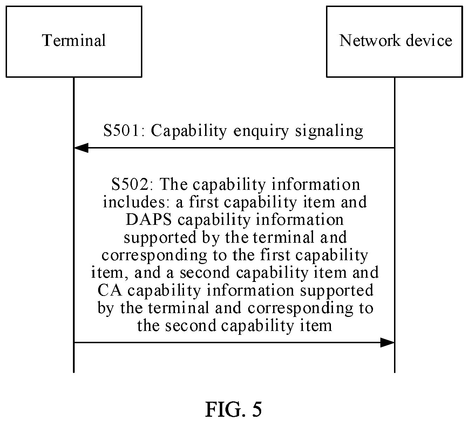

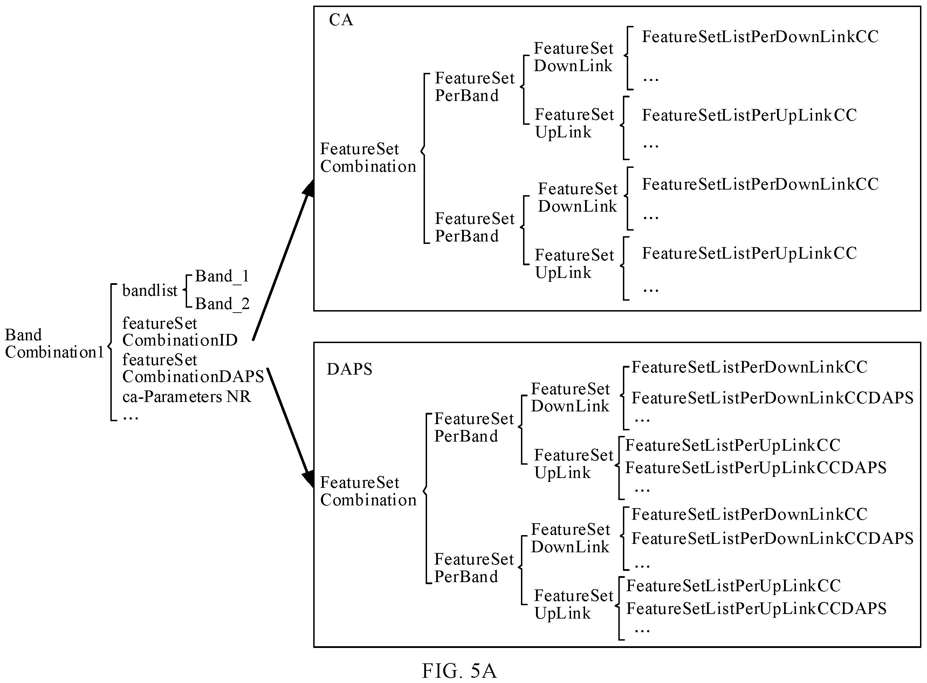

FIG. 5Ais a schematic diagram of capability information according to an embodiment of this application;

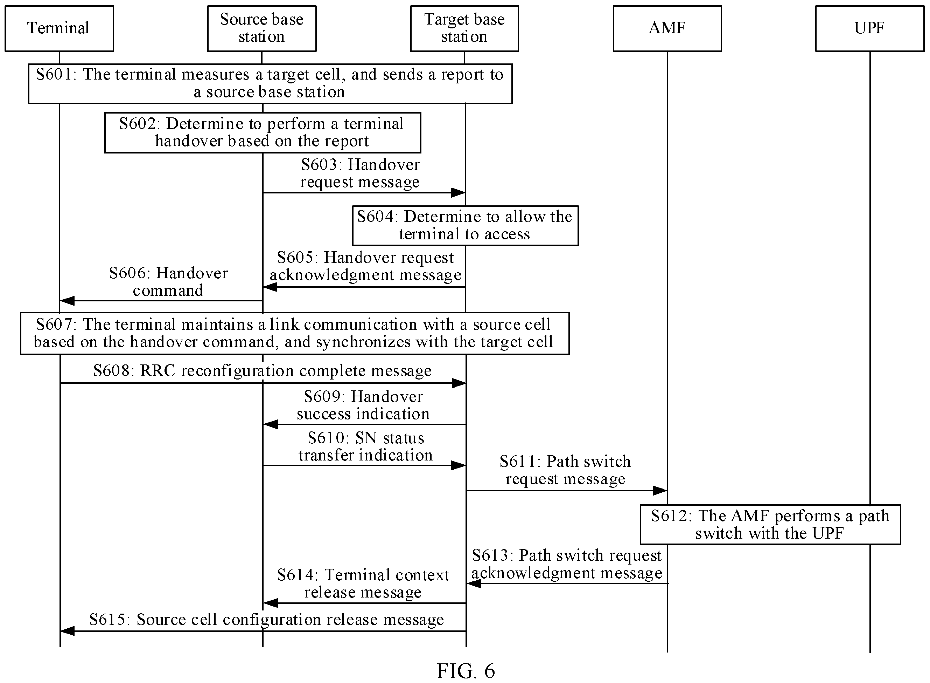

FIG. 6 is a schematic flowchart of an existing DAPS handover;

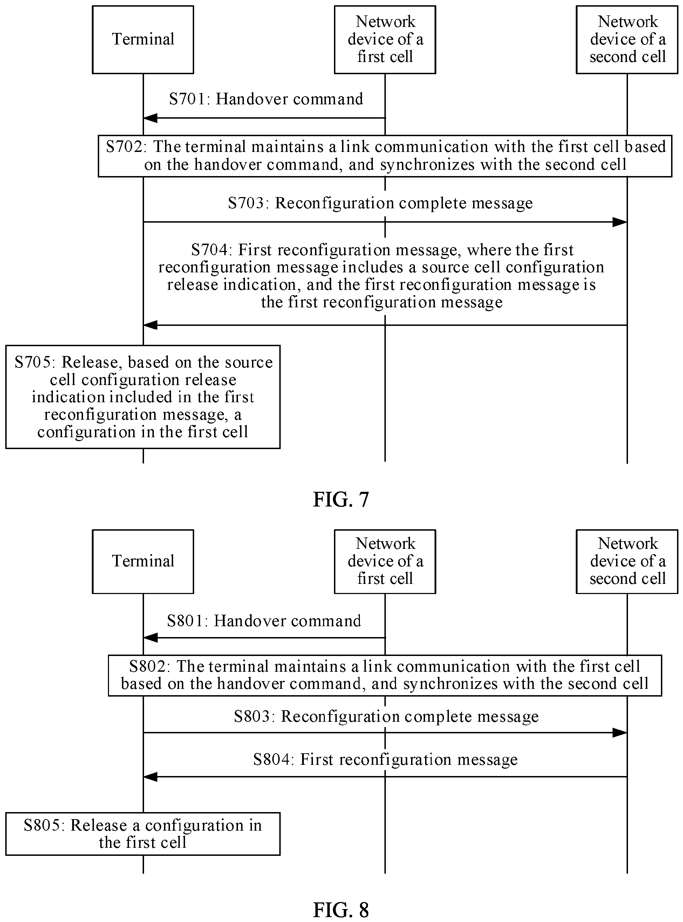

FIG. 7 is another schematic flowchart of an information transmission method according to an embodiment of this application;
FIG. 8 is still another schematic flowchart of an information transmission method according to an embodiment of this application;

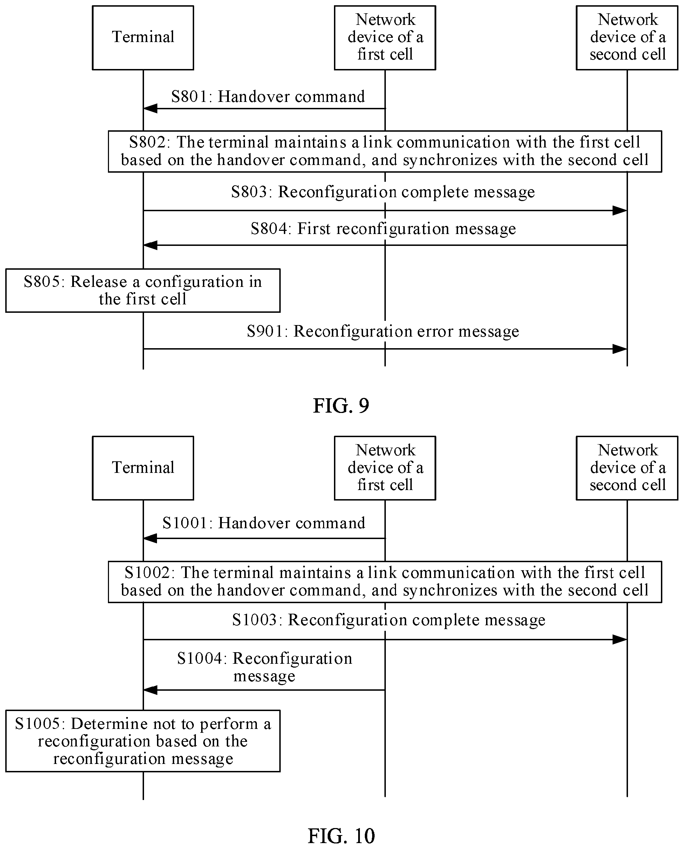

FIG. 9 is still another schematic flowchart of an information transmission method according to an embodiment of this application;
FIG. 10 is still another schematic flowchart of an information transmission method according to an embodiment of this application;

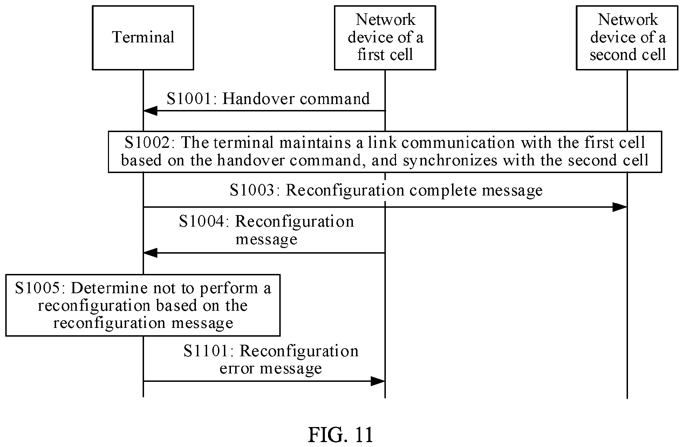

FIG. 11 is still another schematic flowchart of an information transmission method according to an embodiment of this application;

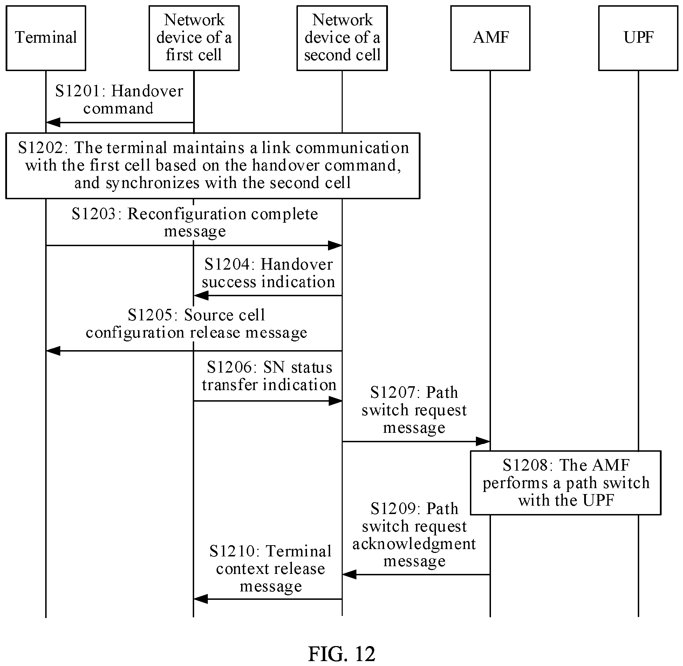

FIG. 12 is still another schematic flowchart of an information transmission method according to an embodiment of this application;

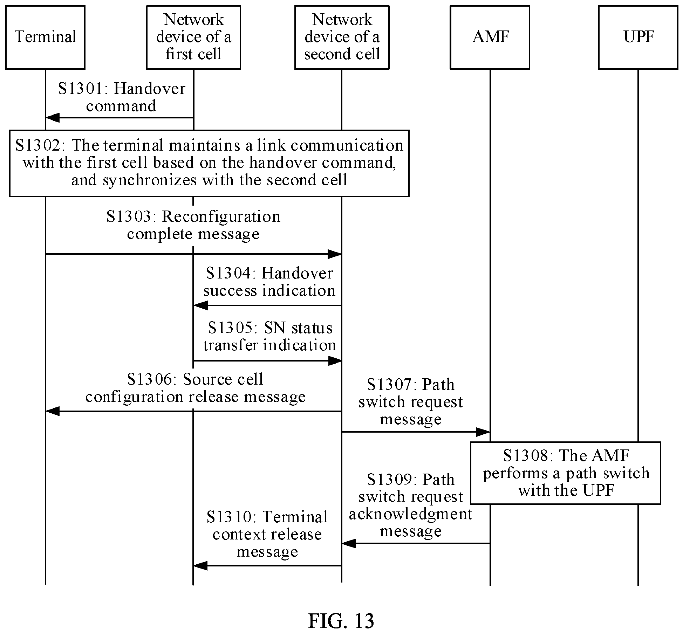

FIG. 13 is still another schematic flowchart of an information transmission method according to an embodiment of this application;

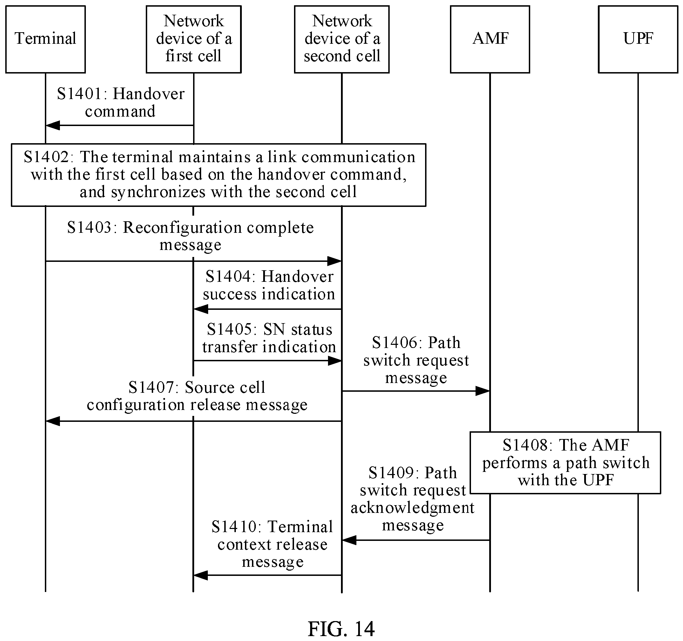

FIG. 14 is still another schematic flowchart of an information transmission method according to an embodiment of this application;

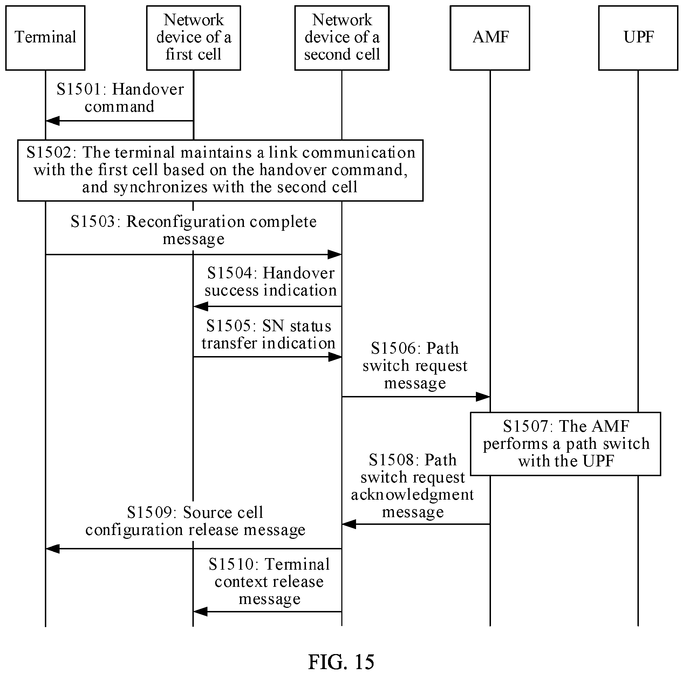

FIG. 15 is still another schematic flowchart of an information transmission method according to an embodiment of this application;

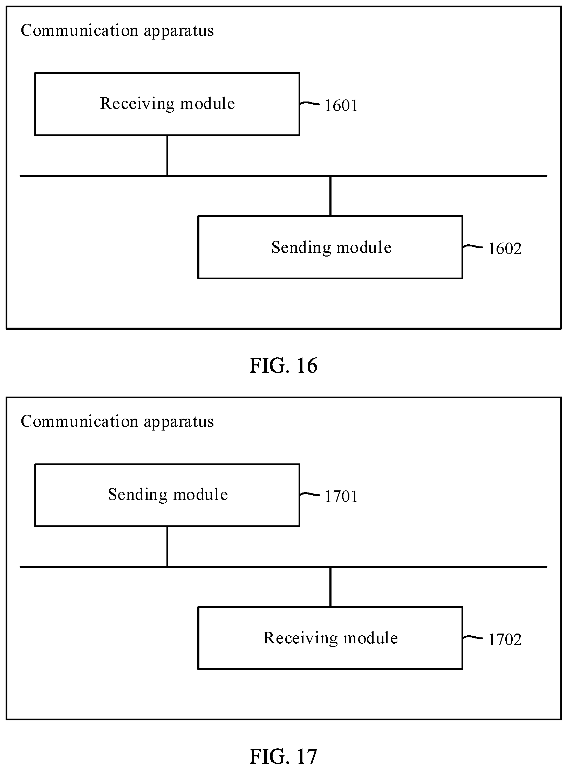

FIG. 16 is a schematic diagram of a structure of a communication apparatus according to an embodiment of this application;
FIG. 17 is a schematic diagram of another structure of a communication apparatus according to an embodiment of this application;

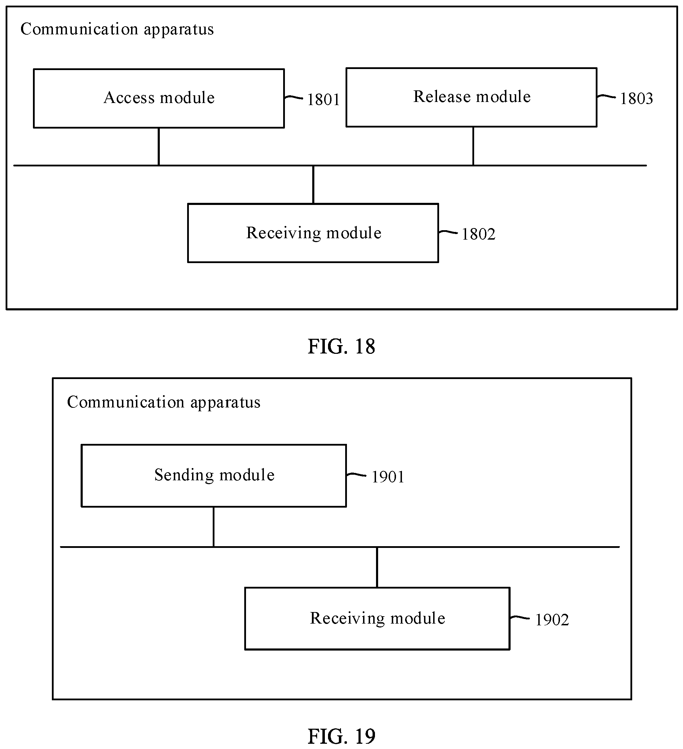

FIG. 18 is a schematic diagram of still another structure of a communication apparatus according to an embodiment of this application;
FIG. 19 is a schematic diagram of still another structure of a communication apparatus according to an embodiment of this application;

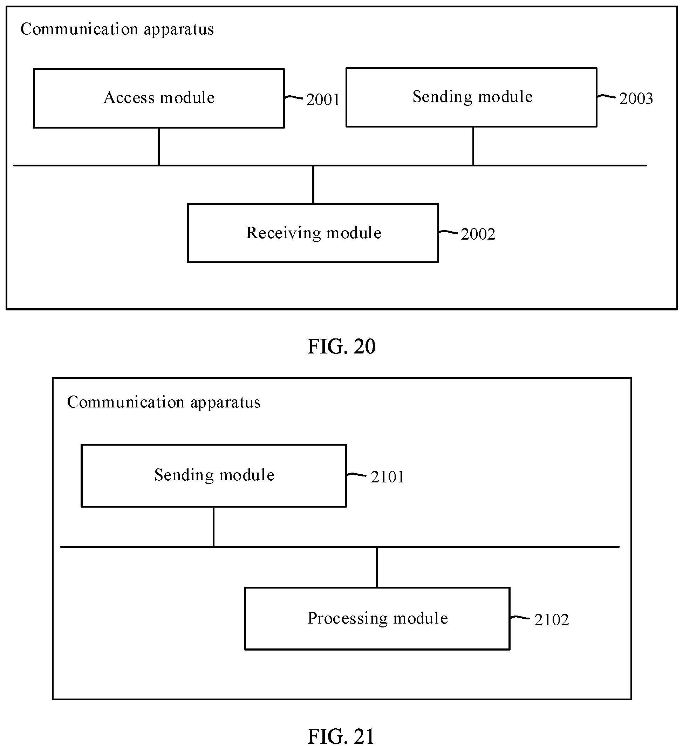

FIG. 20 is a schematic diagram of still another structure of a communication apparatus according to an embodiment of this application;
FIG. 21 is a schematic diagram of still another structure of a communication apparatus according to an embodiment of this application; and

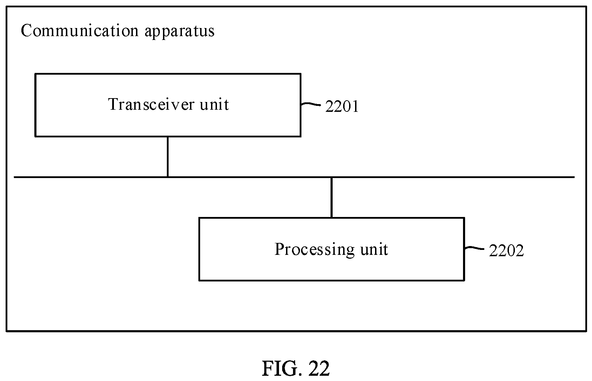

FIG. 22 is a schematic diagram of still another structure of a communication apparatus according to an embodiment of this application.

### DESCRIPTION OF EMBODIMENTS

A concept of a dual active protocol stack (dual active protocol stack, DAPS) handover is introduced in 5^{th} generation (5^{th} generation, 5G) mobile communication standard R16. The DAPS handover means that, in a process of a handover from a source cell to a target cell, user equipment (user equipment, UE) maintains a connection to both the source cell and the target cell to which the user equipment is to be handed over, and does not release a link to the source cell until a link with the target cell is successfully established.

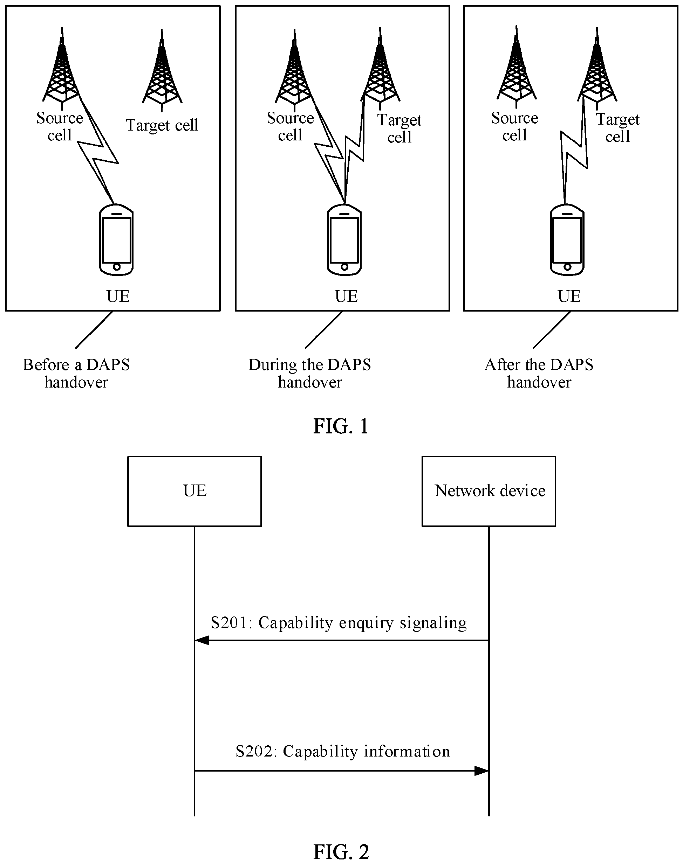

For example, FIG. 1 is a schematic diagram of a DAPS handover.

As shown in FIG. 1, before the DAPS handover is performed, there is a link communication between UE and a source cell. In a DAPS handover process, the UE maintains a connection to both the source cell and a target cell. That is, in a process of accessing the target cell, the UE maintains the link communication with the source cell. After the UE successfully accesses the target cell and successfully establishes a link with the target cell, that is, after the DAPS handover is completed, the UE releases the link with the source cell.

Through the DAPS handover, an interruption time caused by a UE handover process can be reduced, and reliability of a UE handover and can be improved.

Before initiating the DAPS handover, a network device (for example, a source base station corresponding to the source cell) needs to know whether the UE supports a DAPS capability and a DAPS specification parameter supported by the UE. The network device initiates the DAPS handover only when determining that the UE supports the DAPS capability. That is, before initiating the DAPS handover, the network device needs to first obtain DAPS capability information supported by the UE. For example, the network device may obtain the DAPS capability supported by the UE by using a UE capability enquiry procedure.

The following describes the UE capability enquiry procedure and a process in which the network device obtains the DAPS capability supported by the UE by using the UE capability enquiry procedure in the current technology.

A UE capability enquiry means that: after the UE establishes an initial connection to the network device, the network device sends capability enquiry signaling to the UE. After receiving the capability enquiry signaling, the UE returns the capability supported by the UE to the network device.

For example, FIG. 2 is a schematic flowchart of a UE capability enquiry.

As shown in FIG. 2, a UE capability enquiry procedure may include S201 and S202.

S201: A network device sends capability enquiry signaling to UE.

In a possible design, the capability enquiry signaling may be "UECapabiliyEnquiry".

Correspondingly, the UE receives the capability enquiry signaling from the network device.

S202: The UE sends capability information to the network device.

In a possible design, the UE may send the capability information to the network device by using signaling "UECapabilityInformation".

Optionally, in the foregoing UE capability enquiry process, the network device may request capabilities of multiple standards from the UE by using the signaling "UECapabiliyEnquiry". Correspondingly, the UE may return the capabilities corresponding to the standards requested by the network device to the network device by using the signaling "UECapabilityInformation".

For example, the signaling "UECapabiliyEnquiry" sent by the network device to the UE may include a "reqRatList" field. When a capability of a 5G standard is requested in the "reqRatList" field, for example, the "reqRatList" field includes an "Nr-rat" field, the capability information reported by the UE to the network device needs to include the capability of the 5G standard supported by the UE. For example, a "UE-NR-Capability" field may be added to the signaling "UECapabilityInformation", to report the capability of the 5G standard supported by the UE.

Alternatively, when a capability of a 4G-5G hybrid networking standard is requested in the "reqRatList" field, for example, the "reqRatList" field includes a "Eutra-Nr-rat" field, the capability information reported by the UE to the network device needs to include the capability of the 4G-5G hybrid networking standard supported by the UE. For example, a "UE-MRDC-Capability" field may be added to the signaling "UECapabilityInformation", to report the capability of the 4G-5G hybrid networking standard supported by the UE.

Alternatively, when a capability of a 4G standard is requested in the "reqRatList" field, for example, the "reqRatList" field includes a "Eutra-rat" field, the capability information reported by the UE to the network device needs to include the capability of the 4G standard supported by the UE. For example, a "UE-EUTRA-Capability" field may be added to the signaling "UECapabilityInformation", to report the capability of the 4G standard supported by the UE.

By using an example in which the capability information includes the capability of the 5G standard supported by the UE, the "UE-NR-Capability" field mainly includes the following fields: "Phy-Parameters", "RF-Parameters", "PDCP-Parameters", "RLC-Parameters", "MAC-Parameters", "featureSetCombinations", and the like.

The "Phy-Parameters" field includes physics (physics) parameters (parameters) of the UE; the "RF-Parameters" field includes radio frequency (radio frequency, RF) parameters of the UE; the "PDCP-Parameters" field includes packet data convergence protocol (packet data convergence protocol, PDCP) parameters of the UE; the "RLC-Parameters" field includes radio link control (radio link control, RLC) parameters of the UE; and the "MAC-Parameters" field includes medium access control (medium access control, MAC) parameters of the UE.

The "featureSetCombinations" field includes multiple "featureSetCombination" fields. Each "featureSetCombination" field corresponds to one or more band combinations (band combination), and different "featureSetCombination" fields correspond to different band combinations.

The RF parameters of the UE included in the "RF-Parameters" field may include: a band combination list supported by the UE (support band combination list), and a field of the list may be represented as "supportBandCombinationList". The band combination list includes multiple band combinations (band combination), and fields of the multiple band combinations may be represented as "BandCombination1", "BandCombination2", "BandCombination3", and the like. Fields of each band combination may include: a "bandlist" field, a "caParametersNR" field, a "featureSetCombinationID" field, and the like. The "bandlist" field represents information about each band forming the band combination, for example, a band number (band ID) and a carrier aggregation level (band width class). The "caParametersNR" field represents capability parameters related to carrier aggregation of NR bands. The "featureSetCombinationID" field corresponds to a "featureSetCombination" field corresponding to the band combination.

The "featureSetCombination" field includes a specific parameter of each band in the corresponding band combination. For example, a specific parameter corresponding to a band 1 may be represented by using a "FeatureSetPerBand (Band_1)" field; and a specific parameter corresponding to a band 2 may be represented by using a "FeatureSetPerBand (Band_2)" field.

Each "FeatureSetPerBand" field may further include a "FeatureSetDownLink" field and a "FeatureSetUpLink" field. For example, a "FeatureSetPerBand->FeatureSetDownLink" field indicates a downlink parameter of the band, and a "FeatureSetPerBand->FeatureSetUpLink" field indicates an uplink parameter of the band.

Each "FeatureSetDownLink" field may further include a "FeatureSetListPerDownLinkCC" field. For example, a "FeatureSetDownLink->FeatureSetListPerDownLinkCC" field indicates a downlink parameter of each downlink carrier (CC) in the band. Each "FeatureSetUpLink" field may further include a "FeatureSetListPerUpLinkCC" field. For example, a "FeatureSetUpLink->FeatureSetListPerUpLinkCC" field indicates an uplink parameter of each uplink carrier in the band.

Currently, a main direction of 3^{rd} generation partnership project (3^{rd} generation partnership project, 3GPP) standards is to report DAPS capability information supported by the UE by reusing a structure of the "BandCombination" field in the foregoing UE capability enquiry procedure.

For example, the DAPS capability information mainly includes parameter information of a source cell and a target cell, and parameter information when the UE establishes a connection to both the source cell and the target cell. The parameter information of the source cell and target cell is reported by using a "BandCombination->featureSetCombinationID" field and a "featureSetCombination" field corresponding to the "BandCombination->featureSetCombinationID" field. The parameter information when the UE establishes the connection to both the source cell and the target cell is reported by using a "BandCombination->caParametersNR" field and a "BandCombination->bandlist->band" field.

It can be learned that, in the foregoing manner of reporting the DAPS capability information by reusing the structure of the "BandCombination" field, the structure of the "BandCombination" field is originally for reporting CA capability information. Therefore, when the DAPS capability information is reported by reusing the structure of the "BandCombination" field, the DAPS capability information to be reported needs to be the same as the CA capability information. However, actually, the DAPS capability information may be different from the CA capability information, and DAPS capability information different from the CA capability information cannot be reported by using the manner of reporting the DAPS capability information by reusing the structure of the "BandCombination" field.

For example, in a possible manner, that the DAPS capability information is different from the CA capability information may mean that: a terminal supports a DAPS handover between a band A and a band B, but does not support carrier aggregation between the band A and the band B. Alternatively, in another possible manner, that the DAPS capability information is different from the CA capability information may also mean that: under the carrier aggregation of the band A and the band B, a number of uplink multiple-input multiple-output (multiple-input multiple-output, MIMO) layers of a carrier CC1 in the band A and a carrier CC2 in the band B is 1+1. However, during the DAPS handover, a number of uplink MIMO layers of the carrier CC1 in the band A and the carrier CC2 in the band B is 2+2.

It should be understood that, the foregoing description that the DAPS capability information is different from the CA capability information is merely an example for description.

Based on this, embodiments of this application provide an information transmission method. When a terminal (or referred to as UE) sends capability information of the terminal to a network device after receiving capability enquiry signaling from the network device, the terminal may report DAPS capability information and CA capability information by using two different capability items. For example, the capability information may include a first capability item and a second capability item, where the first capability item corresponds to the DAPS capability information supported by the terminal, and the second capability item corresponds to the CA capability information supported by the terminal.

The second capability item may be the foregoing "featureSetCombinationID" field. The first capability item may be a "featureSetCombinationDAPS" field similar to the foregoing "featureSetCombinationID" field.

In the information transmission method, the DAPS capability information and the CA capability information are separately reported by using the first capability item and the second capability item, so that the DAPS capability information and the CA capability information that are supported by the terminal can be separately reported, so that both the CA capability information and the DAPS capability information can be reported to the network device when the DAPS capability information is the same as or different from the CA capability information.

With reference to the accompanying drawings, the following describes an example of the information transmission method provided in the embodiments of this application.

It should be noted that, in descriptions of this application, words such as "first" and "second" are merely used for distinguishing and description, and are not used to specially limit a feature. In descriptions of the embodiments of this application, the term "and/or" describes an association relationship between associated objects and indicates that three relationships may exist. For example, A and/or B may indicate the following three cases: Only A exists, both A and B exist, and only B exists. The character "/" usually indicates an "or" relationship between associated objects. In this application, "at least one" means one or more, and "multiple" means two or more.

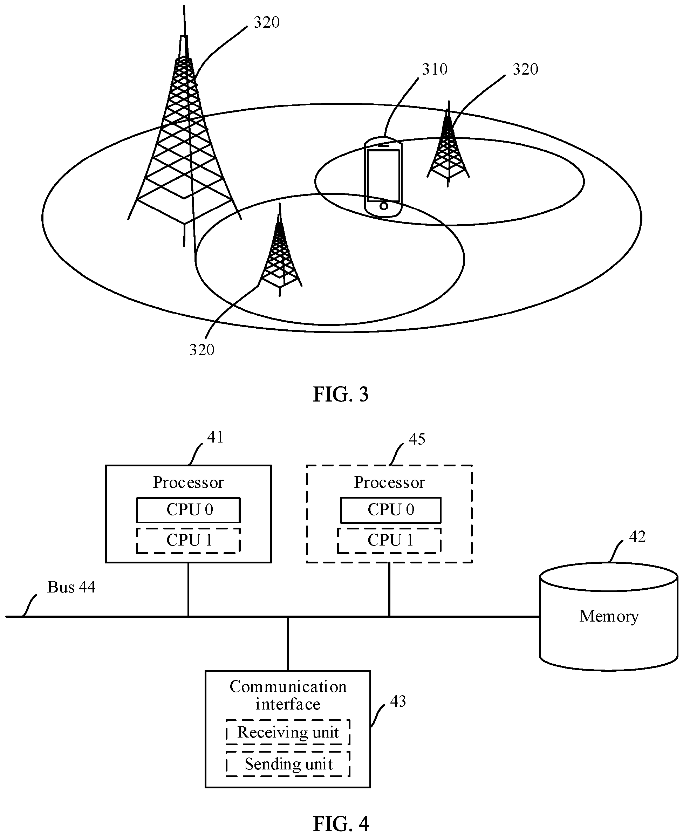

An application scenario of the information transmission method provided in the embodiments of this application may be a communication system. FIG. 3 is a schematic composition diagram of a communication system according to an embodiment of this application.

As shown in FIG. 3, the communication system may include: a terminal 310 and multiple network devices 320 (for example, a network device 1 to a network device n).

The network device may also be referred to as a radio access network device or a next generation radio access network device. The terminal 310 may communicate with the network devices 320. The network devices 320 may provide function services such as radio resource management, quality of service management, and data encryption and compression for the terminal 310. Different network devices 320 may communicate with each other through an Xn interface.

The terminal 320 is located within coverage of one or more cells (carriers) provided by the network devices 320, and there may be one or more cells serving the terminal. When there are multiple cells serving the terminal, the terminal may work in a manner of CA, dual connectivity (dual connectivity, DC), or coordinated multipoint transmission.

Optionally, the communication system may further include a core network device (not shown in the figure), and the core network device may communicate with the network devices 320 through a next generation (next generation, NG) interface.

Optionally, the communication system may be a universal mobile telecommunications system (universal mobile telecommunications system, UMTS), a code division multiple access (code division multiple access, CDMA) system, a wireless local area network (wireless local area network, WLAN), a wideband code division multiple access (wideband code division multiple access, WCDMA) system, a long term evolution (long term evolution, LTE) system, an LTE frequency division duplex (frequency division duplex, FDD) system, a universal mobile telecommunications system (universal mobile telecommunications system, UMTS), a 5^{th} generation (5^{th} generation, 5G) communication system, another wireless communication system using an orthogonal frequency division multiplexing (orthogonal frequency division multiplexing, OFDM) technology, or the like. A specific type of the communication system is not limited in this application.

Optionally, the terminal 310 in the communication system may also be referred to as UE, a mobile station (mobile station, MS), a mobile terminal (mobile terminal, MT), or the like. The terminal 310 may be a device that provides voice or data connectivity for a user. For example, the terminal may be a mobile phone (a "cellular" phone), a cell phone, a computer, a cordless phone, a session initiation protocol (session initiation protocol, SIP) phone, a wireless local loop (wireless local loop, WLL) station, a personal digital assistant (personal digital assistant, PDA), a laptop computer, a handheld communication device, a handheld computing device, a satellite wireless device, a wireless modem card, a TV set top box (set top box, STB), a customer premise equipment (customer premise equipment, CPE), a wearable device (for example, a smart watch, a smart bracelet, or a pedometer), a vehicle-mounted device (for example, a car, a bicycle, an electric vehicle, an airplane, a ship, a train, or a high-speed rail), a virtual reality (virtual reality, VR) device, an augmented reality (augmented reality, AR) device, a wireless terminal in industrial control (industrial control), a smart home device (for example, a refrigerator, a TV, an air conditioner, or an electricity meter), an intelligent robot, a workshop device, a wireless terminal in self driving (self driving), a wireless terminal in remote medical surgery (remote medical surgery), a wireless terminal in smart grid (smart grid), a wireless terminal in transportation safety (transportation safety), a wireless terminal in a smart city (smart city), a wireless terminal in a smart home (smart home), a flight device (for example, an intelligent robot, a hot air balloon, an uncrewed aerial vehicle, or an aircraft), another device configured to communicate in a wireless system, or the like. A specific representation form of the terminal 310 is not limited in this application either.

In some embodiments, the network device 320 may be a next generation node (next generation NodeB, gNB), an evolved NodeB (evolved NodeB, eNB), a next generation evolved node (next generation evolved NodeB, ng-eNB), a transmission reception point (transmission reception point, TRP), a radio network controller (radio network controller, RNC), a base station controller (base station controller, BSC), a base transceiver station (base transceiver station, BTS), a home base station (for example, a home evolved NodeB or a home NodeB, HNB), a base band unit (base band unit, BBU), a wireless fidelity (wireless fidelity, Wi-Fi) access point (access point, AP), a central unit (central unit, CU), a distributed unit (distributed unit, DU), a central unit-control plane (central unit-control plane, CU-CP), a central unit-user plane (central unit-user plane, CU-UP), or the like.

The gNB may provide new radio (new radio, NR) control plane and/or user plane protocol and function for the terminal 310, and access a 5G core network (5^{th} generation core, 5GC).

The ng-eNB may provide evolved universal terrestrial radio access (evolved universal terrestrial radio access, E-UTRA) control plane and/or user plane protocol and function for the terminal 310, and access the 5GC.

The CU mainly includes an RRC layer, a service data adaptation protocol (service data adaptation protocol, SDAP) layer, and a packet data convergence protocol (packet data convergence protocol, PDCP) layer of the gNB, or an RRC layer and a PDCP layer of the ng-eNB.

The DU mainly includes a radio link control (radio link control, RLC) layer, a medium access control (medium access control, MAC) layer, and a physical layer of the gNB or the ng-eNB.

The CU-CP mainly includes an RRC layer in a gNB-CU or an ng-eNB-CU and a control plane at the PDCP layer.

The CU-UP mainly includes an SDAP layer in the gNB-CU or the ng-eNB-CU and a user plane at the PDCP layer.

It may be understood that, the foregoing communication system shown in FIG. 3 is merely intended to describe the technical solutions in the embodiments of this application more clearly, and does not constitute a limitation on the technical solutions provided in the embodiments of this application. For example, the communication system may further include another device, for example, a network control device. The network control device may be an operation administration and maintenance (operation administration and maintenance, OAM) system, which is also referred to as a network management system. The network control device may manage the foregoing network devices 320.

In addition, a person of ordinary skill in the art may learn that the technical solutions provided in the embodiments of this application are also applicable to a similar technical problem as a network architecture evolves and a new service scenario emerges.

FIG. 4 is a schematic composition diagram of a network device according to an embodiment of this application. The network device may be the network device 320 in the foregoing communication system shown in FIG. 3. As shown in FIG. 4, the network device may include: at least one processor 41, a memory 42, a communication interface 43, and a bus 44.

The following describes each component of the network device in detail with reference to FIG. 4.

The processor 41 is a control center of the network device, and may be one processor or may be a general term of multiple processing elements. For example, the processor 41 may be a central processing unit (central processing unit, CPU), or may be an application-specific integrated circuit (application-specific integrated circuit, ASIC), or may be configured as one or more integrated circuits implementing this embodiment of this application, for example, one or more microprocessors (digital signal processor, DSP) or one or more field programmable gate arrays (field programmable gate array, FPGA).

The processor 41 may run or execute a software program stored in the memory 42, and invoke data stored in the memory 42, to perform various functions of the network device.

In specific implementation, in an embodiment, the processor 41 may include one or more CPUs, for example, a CPU 0 and a CPU 1 shown in FIG. 4.

In specific implementation, in an embodiment, the network device may include multiple processors, for example, the processor 41 and a processor 45 shown in FIG. 4. Each of the processors may be a single-core processor (single-CPU), or may be a multi-core processor (multi-CPU). Herein, the processors may be one or more devices, circuits, and/or processing cores configured to process data (for example, computer program instructions).

The memory 42 is configured to store a software program for executing the method steps performed by the network device in the solutions of this application, and the processor 41 controls the execution. The memory 42 may be a read-only memory (read-only memory, ROM) or another type of static storage device that can store static information and instructions, or a random access memory (random access memory, RAM) or another type of dynamic storage device that can store information and instructions. The memory 42 may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), or a magnetic disk storage medium or another magnetic storage device, or any other medium that can be used to carry or store expected program code in a form of instructions or a data structure and that is accessible by a computer, but is not limited thereto.

The memory 42 may exist independently and is connected to the processor 41 through the bus 44. The memory 42 may alternatively be integrated in the processor 41, and is not limited herein.

The communication interface 43 uses any apparatus such as a transceiver, to communicate with another device or a communication network. The communication interface 43 may be an Ethernet interface, a radio access network (radio access network, RAN) interface, a wireless local area network (wireless local area networks, WLAN) interface, or the like. The communication interface 43 may include a receiving unit for implementing a receiving function and a sending unit for implementing a sending function.

The bus 44 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one bold line in FIG. 4. However, this does not indicate that there is only one bus or only one type of bus.

Although the bus 44 is used in FIG. 4, it may be understood that, the bus may also be replaced with a connection relationship in another form, and is not limited to the bus itself.

Optionally, a structure of the terminal 310 in the foregoing communication system shown in FIG. 3 may also include some structures similar to those of the network device shown in FIG. 4, for example, a processor, a memory, a communication interface, and a bus, to implement various functions of the terminal 310. Details are not described herein again.

The following describes an information transmission method provided in an embodiment of this application with reference to FIG. 5. FIG. 5 is a schematic flowchart of an information transmission method according to an embodiment of this application.

As shown in FIG. 5, the information transmission method may include S501 to S502.

S501: A network device sends capability enquiry signaling to a terminal.

The network device is the network device in the foregoing communication system shown in FIG. 3, for example, may be a gNB, an eNB, an ng-eNB, or the like.

For example, the network device may send a first RRC message to the terminal, and the first RRC message may include the capability enquiry signaling.

In a possible design, the capability enquiry signaling may be "UECapabiliyEnquiry".

Correspondingly, the terminal receives the capability enquiry signaling from the network device.

After receiving the capability enquiry signaling from the network device, the terminal may return capability information supported by the terminal to the network device. For example, S502 may be performed.

S502: The terminal sends the capability information of the terminal to the network device, where the capability information includes: a first capability item and DAPS capability information supported by the terminal and corresponding to the first capability item, and a second capability item and CA capability information supported by the terminal and corresponding to the second capability item.

Correspondingly, the network device receives the capability information from the terminal.

For example, the terminal may send a second RRC message to the network device, where the second RRC message may include terminal capability information signaling, and the terminal capability information signaling includes the capability information supported by the terminal.

In a possible design, the terminal capability information signaling may be "UECapabilityInformation".

By using an example in which the terminal capability information signaling is the "UECapabilityInformation", the following specifically describes the capability information sent by the terminal to the network device.

The signaling "UECapabilityInformation" may include the following fields: "Phy-Parameters", "RF-Parameters", "PDCP-Parameters", "RLC-Parameters", "MAC-Parameters", "featureSetCombinations", and the like.

The "Phy-Parameters" field, the "RF-Parameters" field, the "PDCP-Parameters" field, the "RLC-Parameters" field, the "MAC-Parameters" field, and the "featureSetCombinations" field are the same as related descriptions in the foregoing content, and details are not described herein again.

For example, same as the related descriptions in the foregoing content, the "featureSetCombinations" field includes multiple "featureSetCombination" fields. Each "featureSetCombination" field corresponds to one band combination (band combination), and different "featureSetCombination" fields correspond to different band combinations.

Each "featureSetCombination" field includes a specific parameter of each band in the corresponding band combination. For example, the specific parameter may be represented by using a "FeatureSetPerBand" field.

Each "FeatureSetPerBand" field may further include a "FeatureSetDownLink" field and a "FeatureSetUpLink" field. For example, a "FeatureSetPerBand->FeatureSetDownLink" field indicates a downlink parameter of the band, and a "FeatureSetPerBand->FeatureSetUpLink" field indicates an uplink parameter of the band.

Each "FeatureSetDownLink" field may further include a "FeatureSetListPerDownLinkCC" field. For example, a "FeatureSetDownLink->FeatureSetListPerDownLinkCC" field indicates a downlink parameter of each downlink carrier in the band. Each "FeatureSetUpLink" field may further include a "FeatureSetListPerUpLinkCC" field. For example, a "FeatureSetUpLink->FeatureSetListPerUpLinkCC" field indicates an uplink parameter of each uplink carrier in the band.

A difference lies in that, in this embodiment of this application, in the "RF-Parameters" field, in addition to fields such as a "bandlist" field, a "caParametersNR" field, and a "featureSetCombinationID" field, a "BandCombination" field of each band combination further includes a "featureSetCombinationDAPS" field.

For example, an example of modifying abstract syntax notification (abstract syntax notification, ASN) for adding the "featureSetCombinationDAPS" field to the "BandCombination" field of each band combination may be as follows:

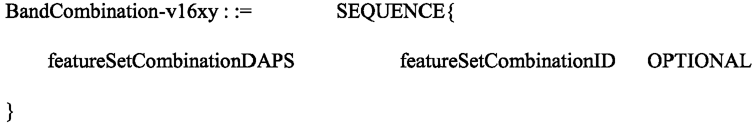

The ASN is a protocol language widely used in various standard protocols, and defines various syntax types and corresponding encoding and decoding rules. According to 3GPP specifications, all standard interfaces of a base station use an ASN protocol to perform message encoding and decoding. That is, messages traced on standard interface tracing are all messages obtained after ASN encoding of the base station/a core network/the terminal. During standard message tracing, a DLL corresponding to a specific interface is invoked to decode and parse the messages.

The "featureSetCombinationDAPS" field may be referred to as the first capability item, can correspond to a "featureSetCombination" field included in the "featureSetCombinations" field, and is used for reporting the DAPS capability information supported by the terminal to the network device. For example, parameter information of a source cell and a target cell supported by the terminal may be reported to the network device by using the first capability item (the "featureSetCombinationDAPS" field) and the "featureSetCombination" field corresponding to the first capability item.

The "featureSetCombinationID" field may be referred to as the second capability item, can also correspond to a "featureSetCombination" field included in the "featureSetCombinations" field, and is used for reporting the CA capability information supported by the terminal to the network device. For example, the CA capability information supported by the terminal may be reported to the network device by using the second capability item (the "featureSetCombinationID" field) and the "featureSetCombination" field corresponding to the second capability item.

That is, it may be understood that, the DAPS capability information supported by the terminal and corresponding to the foregoing first capability item is one "featureSetCombination" field of the multiple "featureSetCombination" fields included in the "featureSetCombinations" field, that is, a specific parameter of each band in one of multiple band combinations. The CA capability information supported by the terminal and corresponding to the foregoing second capability item is also one "featureSetCombination" field of the multiple "featureSetCombination" fields included in the "featureSetCombinations" field, that is, a specific parameter of each band in one of multiple band combinations.

FIG. 5A is a schematic diagram of capability information according to an embodiment of this application.

Referring to FIG. 5A, for the second capability item, specifically, a featureSetCombinationID is used as an example.

The second capability item featureSetCombinationID is used for identifying a "specific parameter of each band in a band combination" (FeatureSetCombination). For each FeatureSetCombination, the second capability item corresponds to "a "specific parameter of each band in a band combination" (FeatureSetCombination)" of multiple band combinations (featureSetCombinations list or featureSetCombinations). An English description thereof may be that: The IE FeatureSetCombinationId identifies a FeatureSetCombination. The FeatureSetCombinationID of a FeatureSetCombination is the position of the FeatureSetCombination in the featureSetCombinations list (in UE-NR-Capability or UE-MRDC-Capability). The FeatureSetCombinationId = 0 refers to the first entry in the featureSetCombinations list (in LJE-NR-Capability or UE-MRDC-Capability).

For the first capability item, specifically, a featureSetCombinationDAPS is used as an example.

The first capability item featureSetCombinationDAPS is used for identifying a "specific parameter of each band in a band combination" (FeatureSetCombination). For each FeatureSetCombination, the first capability item corresponds to "a "specific parameter of each band in a band combination" (FeatureSetCombination)" of multiple band combinations (featureSetCombinations list or featureSetCombinations). An English description thereof may be that: The IE featureSetCombinationDAPS identifies a FeatureSetCombination. The featureSetCombinationDAPS of a FeatureSetCombination is the position of the FeatureSetCombination in the featureSetCombinations list. The featureSetCombinationDAPS = 0 refers to the first entry in the featureSetCombinations list.

Optionally, the DAPS capability information supported by the terminal and corresponding to the first capability item (the featureSetCombinationDAPS) may be in a UE-NR-Capability or a UE-MRDC-Capability.

The DAPS capability information supported by the terminal and corresponding to the first capability item is a specific parameter of each band in one band combination of the multiple band combinations; or the CA capability information supported by the terminal and corresponding to the second capability item is a specific parameter of each band in one band combination of the multiple band combinations.

Specifically, for "a specific parameter of each band in one band combination of the multiple band combinations", "a specific parameter of each band in a band combination" may refer to a FeatureSetCombination, and "the multiple band combinations" may refer to featureSetCombinations. The "featureSetCombinations" field includes multiple "featureSetCombination" fields. Each "featureSetCombination" field corresponds to one or more band combinations (band combination), and different "featureSetCombination" fields correspond to different band combinations.

In the present invention, the featureSetCombinations is equivalent to the featureSetCombinations list.

For example, the first capability item includes: a first capability item 1 (featureSetCombinationDAPS_1), a first capability item 2 (featureSetCombinationDAPS_2), and a first capability item 3 (featureSetCombinationDAPS_3). "A "specific parameter of each band in a band combination" (FeatureSetCombination)" corresponding to the first capability item 1 (the featureSetCombinationDAPS_1) corresponds to (in position of) "a "specific parameter of each band in a band combination" (FeatureSetCombination)" in the featureSetCombinations list.

Alternatively, the first capability item includes: a first capability item 1 (featureSetCombinationDAPS_1), a first capability item 2 (featureSetCombinationDAPS_2), and a first capability item 3 (featureSetCombinationDAPS_3). "A "specific parameter of each band in a band combination" (FeatureSetCombination)" corresponding to the first capability item 1 (the featureSetCombinationDAPS_1) corresponds to (in position of) "a "specific parameter of each band in a band combination" (FeatureSetCombination)" in the featureSetCombinations.

Optionally, parameter information when the terminal establishes a connection to both the source cell and the target cell can still be reported by using a "BandCombination->caParametersNR" field and a "BandCombination->bandlist->band" field.

In a possible design, when the DAPS capability information supported by the terminal is different from the CA capability information supported by the terminal, the first capability item and the second capability item correspond to a specific parameter of each band in different band combinations. When the DAPS capability information supported by the terminal is the same as the CA capability information supported by the terminal, the first capability item and the second capability item correspond to a specific parameter of each band in a same band combination.

Alternatively, in another possible design, when the DAPS capability information supported by the terminal is the same as the CA capability information supported by the terminal, the first capability item and the second capability item may also correspond to a specific parameter of each band in different band combinations. Although the first capability item and the second capability item correspond to the specific parameter of each band in different band combinations, the specific parameter of each band in the band combinations corresponding to the first capability item and the second capability item may be same. That is, the "featureSetCombinations" field may include two "featureSetCombination" fields with same content, and the first capability item and the second capability item separately correspond to one of the two fields. This is not limited in this application.

From the above description, in the information transmission method provided in this embodiment of this application, the capability information of the terminal sent by the terminal to the network device after receiving the capability enquiry signaling from the network device includes: the first capability item and the dual active protocol stack DAPS capability information supported by the terminal and corresponding to the first capability item, and the second capability item and the carrier aggregation CA capability information supported by the terminal and corresponding to the second capability item, so that the DAPS capability information and the CA capability information that are supported by the terminal can be separately reported. Compared with the current technology, decoupling between the DAPS capability information and the CA capability information that are supported by the terminal is implemented, so that both the CA capability information and the DAPS capability information can be reported to the network device when the DAPS capability information is the same as or different from the CA capability information.

In a possible design, considering that a DAPS may require some capabilities at a per band (per band) granularity and capabilities at a per carrier (per CC) granularity that are dedicated, some DAPS dedicated capability extensions may be further added to a "FeatureSetDownLink" field and a "FeatureSetUpLink" field, and a "FeatureSetListPerDownLinkCC" field and a "FeatureSetListPerUpLinkCC" field in each "FeatureSetPerBand" field.

For example, the ASN may be modified according to the following example:

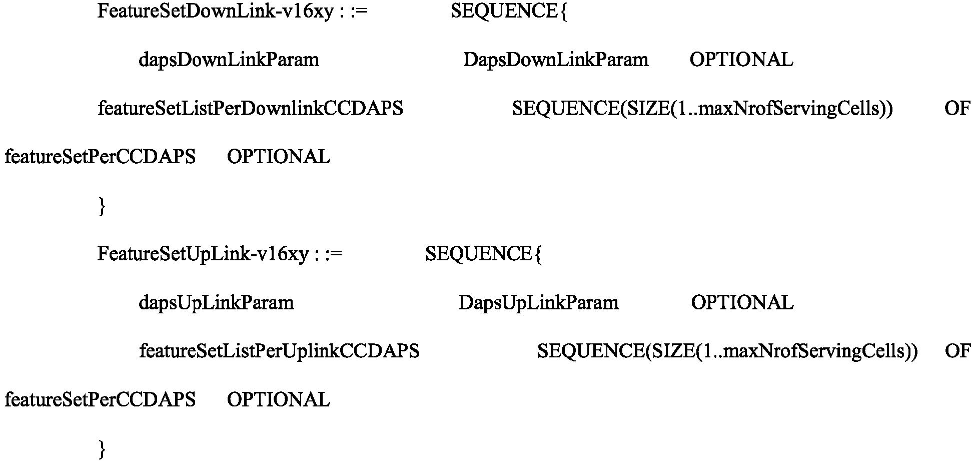

That is, in a structure of the FeatureSetDownLink-v16xy, a new capability item dapsDownLinkParam may be extended to report a downlink DAPS capability at a PerBand granularity; and a new capability item featureSetListPerDownlinkCCDAPS is extended to report a downlink DAPS capability at a PerCC granularity. In a structure of the FeatureSetUpLink-v16xy, a new capability item dapsUpLinkParam is extended to report an uplink DAPS capability at the PerBand granularity; and a new capability item featureSetListPerUplinkCCDAPS is extended to report an uplink DAPS capability at the PerCC granularity.

Correspondingly, in the capability information sent by the terminal to the network device, the DAPS capability information supported by the terminal and corresponding to the first capability item includes: an uplink DAPS capability and a downlink DAPS capability at a per band granularity, and an uplink DAPS capability and a downlink DAPS capability at a per carrier granularity.

"An uplink DAPS capability at a per band granularity" may also be referred to as "an uplink DAPS capability of per band", and specifically refers to an uplink DAPS capability based on the PerBand granularity, or an uplink DAPS capability based on PerBand.

"A downlink DAPS capability at a per band granularity" may also be referred to as "a downlink DAPS capability of per band", and specifically refers to a downlink DAPS capability based on the PerBand granularity, or a downlink DAPS capability based on PerBand.

"An uplink DAPS capability at a per carrier granularity" may also be referred to as "an uplink DAPS capability of per carrier", and specifically refers to an uplink DAPS capability based on the per carrier granularity, an uplink DAPS capability based on per carrier, or an uplink DAPS capability based on per CC.

"A downlink DAPS capability at a per carrier granularity" may also be referred to as "a downlink DAPS capability of per carrier, and specifically refers to a downlink DAPS capability based on the carrier granularity, a downlink DAPS capability based on the carrier, or a downlink DAPS capability based on per CC.

As described above, after obtaining the DAPS capability information of the terminal, the network device may initiate a DAPS handover of the terminal.

The following briefly describes a procedure in which a terminal performs a DAPS handover in the current technology with reference to FIG. 6. FIG. 6 is a schematic flowchart of an existing DAPS handover.

As shown in FIG. 6, a procedure of the existing DAPS handover may include S601 to S614.

S601: A terminal measures a target cell, and sends a report to a source base station.

The report sent by the terminal to the source base station includes an event that a signal strength of a current serving source cell is lower than a threshold and a signal strength of the target cell is higher than the threshold, and other events.

Correspondingly, the source base station receives the report from the terminal.

S602: The source base station determines to perform a terminal handover based on the report.

S603: The source base station sends a handover request (handover request) message to a target base station.

The target base station is a base station corresponding to the foregoing target cell.

S604: The target base station determines to allow the terminal to access.

For example, the target base station may determine, according to a situation such as a number of connections of the target base station, whether to allow the terminal to access, and send, if the terminal is allowed to access, a handover acknowledgment message to the source base station.

S605: The target base station sends a handover request acknowledgment (handover request acknowledge) message to the source base station.

Correspondingly, the source base station receives the handover request acknowledgment message from the target base station.

S606: The source base station sends a handover command to the terminal.

Correspondingly, the source base station receives the handover command. The handover command may include related information of the target cell and a related configuration parameter required for the terminal to access the target cell.

S607: The terminal maintains a link communication with the source cell based on the handover command, and synchronizes with the target cell.

For example, the terminal may initiate random access to the target base station, to complete a configuration in the target cell.

S608: The terminal sends an RRC reconfiguration complete message to the target base station.

Correspondingly, the target base station receives the RRC reconfiguration complete message from the terminal.

S609: The target base station sends a handover success (handover success) indication to the source base station.

Correspondingly, the source base station receives the handover success indication from the target base station.

S610: The source base station sends an SN status transfer (SN status transfer) indication to the target base station.

Correspondingly, the target base station receives the SN status transfer indication.

The target base station may forward user data of the terminal based on the SN status transfer indication.

S611: The target base station sends a path switch request (path switch request) message to an access and mobility management function (access and mobility management function, AMF).

Correspondingly, the AMF receives the path switch request message.

S612: The AMF performs a path switch with a user plane function (user plane function, UPF).

S613: The AMF sends a path switch request acknowledgment (path switch request acknowledge) message to the target base station.

Correspondingly, the target base station receives the path switch request acknowledgment message.

S614: The target base station sends a terminal context release (UE context release) message to the source base station.

Correspondingly, the source base station receives the terminal context release message, and releases terminal context information.

Through the foregoing content, the terminal completes the handover by performing the foregoing steps; and the target base station also implements a path switch procedure of the terminal handover on a core network side, so that terminal data is sent from gateways to the terminal via the target base station.

After S614 is completed, it may be considered that the terminal has basically completed the handover. In this case, the terminal does not need to store a configuration of the source cell (also referred to as a configuration used by the terminal in the source cell), and does not need to maintain a link between the terminal and the source cell. Therefore, there may be step S615: The target base station sends a source cell configuration release message to the terminal.

The source cell configuration release message is used for instructing the terminal to release the configuration in the source cell.

Correspondingly, the terminal receives the source cell configuration release message, and releases the configuration in the source cell (source configuration).

In the foregoing procedure of the DAPS handover, within a period of time (generally several seconds or milliseconds) for which the terminal has not received the source cell configuration release message (for example, a release (release) message) sent by the target base station after the terminal successfully accesses the target cell, that is, within a period of time from after S608 to before S615 shown in FIG. 6, the terminal may receive a reconfiguration message sent by the source base station or the target base station.

When the terminal receives the reconfiguration message sent by the source base station within this period of time, the terminal retains three sets of configurations: the configuration in the source cell, a configuration in the target cell, and a configuration in the reconfiguration message sent by the source base station. When the terminal receives the reconfiguration message sent by the target base station within this period of time, the terminal also retains three sets of configurations: the configuration in the source cell, the configuration in the target cell, and a configuration in the reconfiguration message sent by the target base station.

For the foregoing case in which the terminal retains three sets of configurations, currently, the terminal needs to reserve memory spaces of the three sets of configurations during the DAPS handover. However, implementation complexity of the terminal is greatly increased, and a relatively high requirement is imposed on implementation of the terminal.

Based on this, for a scenario in which the terminal may receive the reconfiguration message sent by the target base station within the period of time for which the terminal has not received the source cell configuration release message sent by the target base station after the terminal successfully accesses the target cell, an embodiment of this application provides an information transmission method, which can simplify the implementation complexity of the terminal.

The following describes the information transmission method by using an example in which the source cell is a first cell, the source base station is a network device of the first cell, the target cell is a second cell, and the target base station is a network device of the second cell.

In a possible design, the method includes that: in a DAPS handover process, when a network device of a second cell sends a reconfiguration message to a terminal after the terminal maintains a link communication with a first cell and successfully accesses the second cell, a first reconfiguration message may include a source cell configuration release indication. The terminal may release a configuration in the first cell based on the source cell configuration release indication.

For example, FIG. 7 is another schematic flowchart of an information transmission method according to an embodiment of this application.

As shown in FIG. 7, in this design, the information transmission method may include the following steps.

S701: A network device of a first cell sends a handover command to a terminal.

Correspondingly, the terminal receives the handover command from the network device of the first cell. The handover command includes related parameter information of a second cell.

S702: The terminal maintains a link communication with the first cell based on the handover command, and synchronizes with the second cell.

For example, the terminal may initiate random access to a network device of the second cell based on the handover command, for example, based on the related parameter information of the second cell included in the handover command, to complete a configuration in the second cell.

Specifically, the handover command includes a configuration to be used by the terminal in the second cell, and the terminal accesses the second cell based on the configuration of the terminal in the second cell in the handover command.

S703: The terminal sends a reconfiguration complete message to the network device of the second cell.

Correspondingly, the network device of the second cell receives the reconfiguration complete message.

Through S701 to S703, the terminal maintains the link communication with the first cell, and successfully accesses the second cell.

S704: The network device of the second cell sends a first reconfiguration message to the terminal, where the first reconfiguration message includes a source cell configuration release indication (daps-SourceRelease), and the first reconfiguration message is the first reconfiguration message.

That is, the first reconfiguration message sent by the network device of the second cell to the terminal includes the source cell configuration release indication.

Specifically, the source cell configuration release indication may be used for instructing the terminal to stop DAPS processing in a source cell, or used for instructing to release a DAPS configuration of the terminal in the source cell, or used for instructing to release a link between the terminal and the source cell. Alternatively, the source cell configuration release indication may be used for instructing the terminal to stop the DAPS processing in the source cell and release the DAPS configuration of the terminal in the source cell (Indicates to UE that the source cell part of DAPS operation is to be stopped and the source cell part of DAPS configuration is to be released).

Correspondingly, the terminal receives the first reconfiguration message from the network device of the second cell. The first reconfiguration message can be used for instructing the terminal to reconfigure the configuration in the second cell.

After receiving the first reconfiguration message, the terminal may release, based on the source cell configuration release indication included in the first reconfiguration message, a configuration of the terminal in the first cell. After receiving the first reconfiguration message, based on the source cell configuration release indication included in the first reconfiguration message, the terminal may stop the DAPS processing in the source cell, or release the DAPS configuration of the terminal in the source cell, or release the link between the terminal and the source cell; or stop the DAPS processing in the source cell and release the DAPS configuration of the terminal in the source cell (Indicates to UE that the source cell part of DAPS operation is to be stopped and the source cell part of DAPS configuration is to be released).

For example, S705 may be performed.

S705: The terminal releases, based on the source cell configuration release indication included in the first reconfiguration message, the configuration in the first cell.

Specifically, based on the source cell configuration release indication included in the first reconfiguration message, the terminal may release the configuration of the terminal in the first cell; or the terminal stops the DAPS processing in the source cell; or the terminal releases the DAPS configuration of the terminal in the source cell; or the terminal releases the link between the terminal and the source cell; or the terminal stops the DAPS processing in the source cell and releases the DAPS configuration of the terminal in the source cell (Indicates to UE that the source cell part of DAPS operation is to be stopped and the source cell part of DAPS configuration is to be released).

Optionally, after S704, the network device of the second cell may further send a second reconfiguration message to the terminal, where the second reconfiguration message is a reconfiguration message after the first reconfiguration message (the first reconfiguration message).

Alternatively, in another possible design, the method includes that: in a DAPS handover process, when a network device of a second cell sends a reconfiguration message to a terminal after the terminal maintains a link communication with a first cell and successfully accesses the second cell, a first reconfiguration message may not include a source cell configuration release indication. When receiving the first reconfiguration message, the terminal may automatically release a configuration in the first cell.

For example, FIG. 8 is still another schematic flowchart of an information transmission method according to an embodiment of this application.

As shown in FIG. 8, in this design, the information transmission method may include the following steps.

S801: A network device of a first cell sends a handover command to a terminal.

Correspondingly, the terminal receives the handover command from the network device of the first cell.

S802: The terminal maintains a link communication with the first cell based on the handover command, and synchronizes with a second cell.

For example, the terminal may initiate random access to a network device of the second cell based on the handover command, to complete a configuration in the second cell.

S803: The terminal sends a reconfiguration complete message to the network device of the second cell.

Correspondingly, the network device of the second cell receives the reconfiguration complete message.

Through S801 to S803, the terminal maintains the link communication with the first cell, and successfully accesses the second cell.

S804: The network device of the second cell sends a first reconfiguration message to the terminal.

Correspondingly, the terminal receives the first reconfiguration message from the network device of the second cell. The first reconfiguration message can be used for instructing the terminal to reconfigure the configuration in the second cell.

After receiving the first reconfiguration message, the terminal may automatically release a configuration of the terminal in the first cell. For example, S805 may be performed.

S805: The terminal releases the configuration in the first cell.

Optionally, after S804, the network device of the second cell may further send a second reconfiguration message to the terminal, where the second reconfiguration message is a reconfiguration message after the first reconfiguration message (the first reconfiguration message).

It can be learned that, a main difference between the embodiment shown in FIG. 8 and the embodiment shown in FIG. 7 lies in that: in the embodiment shown in FIG. 7, the first reconfiguration message sent by the network device of the second cell to the terminal includes the source cell configuration release indication, and the terminal may release the configuration in the first cell based on the source cell configuration release indication, while in the embodiment shown in FIG. 8, the first reconfiguration message sent by the network device of the second cell to the terminal does not include the source cell configuration release indication, and the terminal may automatically release the configuration in the first cell after receiving the first reconfiguration message.

In the information transmission method shown in FIG. 7 or FIG. 8, in a DAPS handover process, when the terminal receives the first reconfiguration message sent by the network device of the second cell after maintaining the link communication with the first cell and successfully accessing the second cell, the terminal releases the configuration in the first cell. Therefore, the terminal only needs to retain two sets of configurations: the configuration in the second cell and the configuration in the reconfiguration message sent by the network device of the second cell, and does not need to retain three sets of configurations. In this way, the terminal does not need to reserve memory spaces of the three sets of configurations during a DAPS handover, thereby greatly reducing implementation complexity of the terminal.

In addition, it should be noted that, the embodiments shown in FIG. 7 and FIG. 8 are described from the step in which the network device (for example, the source base station) of the first cell sends the handover command to the terminal in the DAPS handover process. However, it should be understood that, similar to that shown in FIG. 6, the DAPS handover process further includes more other steps, and details are not described herein again.

Optionally, in the embodiments shown in FIG. 7 and FIG. 8, both a message between the terminal and the network device of the first cell and a message between the terminal and the network device of the second cell may be RRC messages. For example, that the network device of the first cell sends the handover command to the terminal may be that the network device of the first cell sends the handover command to the terminal by using an RRC message; and the first reconfiguration message sent by the network device of the second cell to the terminal may be a first RRC reconfiguration message or the like.

FIG. 9 is still another schematic flowchart of an information transmission method according to an embodiment of this application.

Optionally, as shown in FIG. 9, on a basis of FIG. 8, when the first reconfiguration message does not include the source cell configuration release indication, the information transmission method may further include S901.

S901: The terminal sends a reconfiguration error message to the network device of the second cell.

It should be noted that, FIG. 9 is merely an example for description, and a sequence of S901 and S805 is not limited in this application.

Optionally, when the first reconfiguration message does not include the source cell configuration release indication, the terminal may also ignore the first reconfiguration message, and maintain the configuration in the second cell (keep an existing configuration in the second cell unchanged). The configuration of the terminal in the second cell is a configuration of the second cell included in the handover command from the network device of the first cell when the terminal accesses the second cell. The configuration of the second cell is a configuration used by the terminal in the second cell.

Alternatively, when the first reconfiguration message does not include the source cell configuration release indication, the terminal ignores the first reconfiguration message and maintains the configuration in the second cell, and also sends the reconfiguration error message to the network device of the second cell.

That is, when the first reconfiguration message does not include the source cell configuration release indication, the terminal may maintain a configuration established in the second cell when the terminal accesses the second cell, and/or send the reconfiguration error message to the network device of the second cell. This is not limited in this application.

It can be learned from the embodiments shown in FIG. 7 to FIG. 9 that, in the foregoing solutions that can simplify the implementation complexity of the terminal provided in the embodiments of this application, the terminal does not expect to receive the reconfiguration message that does not include the source cell configuration release indication.

In addition, for a scenario in which the terminal may receive the reconfiguration message sent by the source base station within the period of time for which the terminal has not received the source cell configuration release message sent by the target base station after the terminal successfully accesses the target cell, an embodiment of this application further provides an information transmission method, which can simplify the implementation complexity of the terminal.

Similarly, by using an example in which the source cell is a first cell, the source base station is a network device of the first cell, the target cell is a second cell, and the target base station is a network device of the second cell, the method includes that: in a DAPS handover process, when a network device of a first cell sends a reconfiguration message to a terminal after the terminal maintains a link communication with the first cell and successfully accesses a second cell, the terminal determines not to perform a reconfiguration based on the reconfiguration message, that is, the terminal ignores the reconfiguration message sent by the network device of the first cell.

For example, FIG. 10 is still another schematic flowchart of an information transmission method according to an embodiment of this application.

As shown in FIG. 10, the information transmission method may include the following steps.

S1001: A network device of a first cell sends a handover command to a terminal.

Correspondingly, the terminal receives the handover command from the network device of the first cell.

S1002: The terminal maintains a link communication with the first cell based on the handover command, and synchronizes with a second cell.

For example, the terminal may initiate random access to a network device of the second cell, to complete a configuration in the second cell.

S1003: The terminal sends a reconfiguration complete message to the network device of the second cell.

Correspondingly, the network device of the second cell receives the reconfiguration complete message.

Through S1001 to S1003, the terminal maintains the link communication with the first cell, and successfully accesses the second cell.

S1004: The network device of the first cell sends a reconfiguration message to the terminal.

Correspondingly, the terminal receives the reconfiguration message from the network device of the first cell. The reconfiguration message can be used for instructing the terminal to reconfigure a configuration in the first cell.

S1005: The terminal determines not to perform a reconfiguration based on the reconfiguration message.

Alternatively, S1005 may be that: the terminal keeps the configuration in the first cell unchanged.

In the information transmission method, in a DAPS handover process, when the terminal receives the reconfiguration message sent by the network device of the first cell after maintaining the link communication with the first cell and successfully accessing the second cell, the terminal determines not to perform the reconfiguration based on the reconfiguration message, that is, ignores the reconfiguration message. Therefore, the terminal only needs to retain two sets of configurations: the configuration in the first cell and the configuration in the second cell, and does not need to retain three sets of configurations. In this way, the terminal does not need to reserve memory spaces of the three sets of configurations during a DAPS handover, thereby greatly reducing implementation complexity of the terminal.

FIG. 11 is still another schematic flowchart of an information transmission method according to an embodiment of this application.

As shown in FIG. 11, in a possible design, the information transmission method may further include S1101.

S1101: The terminal sends a reconfiguration error message to the network device of the first cell.

It should also be noted that, FIG. 11 is merely an example for description, and a sequence of S1005 and S1101 is not limited in this application.

In addition, it should be also noted that, the embodiments shown in FIG. 10 and FIG. 11 are described from the step in which the network device (for example, the source base station) of the first cell sends the handover command to the terminal in the DAPS handover process. It should also be understood that, similar to that shown in FIG. 6, the DAPS handover process further includes more other steps, and details are not described herein again.

Optionally, in the embodiments shown in FIG. 10 and FIG. 11, both a message between the terminal and the network device of the first cell and a message between the terminal and the network device of the second cell may also be RRC messages. Details are not described herein again.

Optionally, an embodiment of this application further provides an information transmission method. In the method, in a DAPS handover process, after a terminal maintains a link communication with a first cell and successfully accesses a second cell, a network device of the second cell may send a source cell configuration release message to the terminal on any earlier occasion within the foregoing time period from after S608 to S614 shown in FIG. 6, so that a subsequent reconfiguration message (a reconfiguration message sent by a network device of the first cell, or a reconfiguration message sent by the network device of the second cell) can be sent more flexibly, and implementation complexity of the terminal can also be reduced.

With reference to the accompanying drawings, the following also describes possible design manners of the information transmission method one by one from the step in which the network device (for example, the source base station) of the first cell sends the handover command to the terminal in the DAPS handover process. It should also be understood that, similar to that shown in FIG. 6, the DAPS handover process further includes more other steps, and details are not described herein again.

FIG. 12 is still another schematic flowchart of an information transmission method according to an embodiment of this application. As shown in FIG. 12, in a possible design, the information transmission method may include S1201 to S1210.

S1201: A network device of a first cell sends a handover command to a terminal.

Correspondingly, the terminal receives the handover command from the network device of the first cell.

S1202: The terminal maintains a link communication with the first cell based on the handover command, and synchronizes with a second cell.

For example, the terminal may initiate random access to a network device of the second cell, to complete a configuration in the second cell.

S1203: The terminal sends a reconfiguration complete message to the network device of the second cell.

Correspondingly, the network device of the second cell receives the reconfiguration complete message.

S1204: The network device of the second cell sends a handover success indication to the network device of the first cell.

Correspondingly, the network device of the first cell receives the handover success indication.

S1205: The network device of the second cell sends a source cell configuration release message to the terminal.

In an implementation, S1204 may be performed before S1205. That is, the network device of the second cell sends the source cell configuration release message to the terminal after sending the handover success indication to the network device of the first cell.

In another implementation, S1204 and S1205 may be simultaneously performed. That is, the network device of the second cell sends the source cell configuration release message to the terminal when sending the handover success indication to the network device of the first cell.

Correspondingly, the terminal receives the source cell configuration release message. The terminal may release a configuration in the first cell based on the source cell configuration release message.

S1206: The network device of the first cell sends an SN status transfer indication to the network device of the second cell.

The SN status transfer indication may also be referred to as an SN status transfer message (SN STATUS TRANSFER message). The SN status transfer message or the SN status transfer indication is used for indicating status information of an SN (sequence numbers) of a DRB on which a DAPS handover is performed. The SN is a data packet sequence number of each DRB at a DPCP layer.

Correspondingly, the network device of the second cell receives the SN status transfer indication.

The network device of the second cell may forward user data of the terminal based on the SN status transfer indication.

S1207: The network device of the second cell sends a path switch request message to an AMF.

Correspondingly, the AMF receives the path switch request message.

S1208: The AMF performs a path switch with a UPF.

S1209: The AMF sends a path switch request acknowledgment message to the network device of the second cell.

Correspondingly, the network device of the second cell receives the path switch request acknowledgment message.

S1210: The network device of the second cell sends a terminal context release message to the network device of the first cell.

Correspondingly, a source base station receives the terminal context release message, and releases terminal context information.

FIG. 13 is still another schematic flowchart of an information transmission method according to an embodiment of this application. As shown in FIG. 13, in another possible design, the information transmission method may include S1301 to S1310.

S1301: A network device of a first cell sends a handover command to a terminal.

Correspondingly, the terminal receives the handover command from the network device of the first cell.

S1302: The terminal maintains a link communication with the first cell based on the handover command, and synchronizes with a second cell.

For example, the terminal may initiate random access to a network device of the second cell, to complete a configuration in the second cell.

S1303: The terminal sends a reconfiguration complete message to the network device of the second cell.

Correspondingly, the network device of the second cell receives the reconfiguration complete message.

S1304: The network device of the second cell sends a handover success indication to the network device of the first cell.

Correspondingly, the network device of the first cell receives the handover success indication.

S1305: The network device of the first cell sends an SN status transfer indication to the network device of the second cell.

Correspondingly, the network device of the second cell receives the SN status transfer indication. The network device of the second cell may forward user data of the terminal based on the SN status transfer indication.

S1306: The network device of the second cell sends a source cell configuration release message to the terminal.

In an implementation, S1306 may be performed after the network device of the second cell completes data forwarding. That is, the network device of the second cell sends the source cell configuration release message to the terminal after completing the data forwarding.

In another implementation, S1306 may be performed after S1305 but before the network device of the second cell completes the data forwarding. That is, the network device of the second cell sends the source cell configuration release message to the terminal after receiving the SN status transfer indication from the network device of the first cell.

In still another implementation, S1306 may be performed after the network device of the second cell completes the data forwarding but before S1307. That is, the network device of the second cell sends the source cell configuration release message to the terminal before sending a path switch request message.

Correspondingly, the terminal receives the source cell configuration release message. The terminal may release a configuration in the first cell based on the source cell configuration release message.

S1307: The network device of the second cell sends the path switch request message to an AMF.

Correspondingly, the AMF receives the path switch request message.

S1308: The AMF performs a path switch with a UPF.

S1309: The AMF sends a path switch request acknowledgment message to the network device of the second cell.

Correspondingly, the network device of the second cell receives the path switch request acknowledgment message.

S1310: The network device of the second cell sends a terminal context release message to the network device of the first cell.

Correspondingly, a source base station receives the terminal context release message, and releases terminal context information.

FIG. 14 is still another schematic flowchart of an information transmission method according to an embodiment of this application. As shown in FIG. 14, in still another possible design, the information transmission method may include S1401 to S1410.

S1401: A network device of a first cell sends a handover command to a terminal.

Correspondingly, the terminal receives the handover command from the network device of the first cell.

S1402: The terminal maintains a link communication with the first cell based on the handover command, and synchronizes with a second cell.

For example, the terminal may initiate random access to a network device of the second cell, to complete a configuration in the second cell.

S1403: The terminal sends a reconfiguration complete message to the network device of the second cell.

Correspondingly, the network device of the second cell receives the reconfiguration complete message.

S1404: The network device of the second cell sends a handover success indication to the network device of the first cell.

Correspondingly, the network device of the first cell receives the handover success indication.

S1405: The network device of the first cell sends an SN status transfer indication to the network device of the second cell.

Correspondingly, the network device of the second cell receives the SN status transfer indication. The network device of the second cell may forward user data of the terminal based on the SN status transfer indication.

The SN status transfer indication may also be referred to as an SN status transfer message (SN STATUS TRANSFER message). The SN status transfer message or the SN status transfer indication is used for indicating status information of an SN (sequence numbers) of a DRB on which a DAPS handover is performed. The SN is a data packet sequence number of each DRB at a DPCP layer.

S1406: The network device of the second cell sends a path switch request message to an AMF.

Correspondingly, the AMF receives the path switch request message.

S1407: The network device of the second cell sends a source cell configuration release message to the terminal.

In an implementation, S1406 may be performed before S1407. That is, the network device of the second cell sends the source cell configuration release message to the terminal after sending the path switch request message.

In another implementation, S1406 and S1407 may be simultaneously performed. That is, the network device of the second cell sends the source cell configuration release message to the terminal when sending the handover success indication to the network device of the first cell.

Correspondingly, the terminal receives the source cell configuration release message. The terminal may release a configuration in the first cell based on the source cell configuration release message.

S1408: The AMF performs a path switch with a UPF.

S1409: The AMF sends a path switch request acknowledgment message to the network device of the second cell.

Correspondingly, the network device of the second cell receives the path switch request acknowledgment message.

S1410: The network device of the second cell sends a terminal context release message to the network device of the first cell.

Correspondingly, a source base station receives the terminal context release message, and releases terminal context information.

FIG. 15 is still another schematic flowchart of an information transmission method according to an embodiment of this application. As shown in FIG. 15, in still another possible design, the information transmission method may include S1501 to S1510.

S1501: A network device of a first cell sends a handover command to a terminal.

Correspondingly, the terminal receives the handover command from the network device of the first cell.

S1502: The terminal maintains a link communication with the first cell based on the handover command, and synchronizes with a second cell.

For example, the terminal may initiate random access to a network device of the second cell, to complete a configuration in the second cell.

S1503: The terminal sends a reconfiguration complete message to the network device of the second cell.

Correspondingly, the network device of the second cell receives the reconfiguration complete message.

S1504: The network device of the second cell sends a handover success indication to the network device of the first cell.

Correspondingly, the network device of the first cell receives the handover success indication.

S1505: The network device of the first cell sends an SN status transfer indication to the network device of the second cell.

Correspondingly, the network device of the second cell receives the SN status transfer indication. The network device of the second cell may forward user data of the terminal based on the SN status transfer indication.

S1506: The network device of the second cell sends a path switch request message to an AMF.

Correspondingly, the AMF receives the path switch request message.

S1507: The AMF performs a path switch with a UPF.

S1508: The AMF sends a path switch request acknowledgment message to the network device of the second cell.

Correspondingly, the network device of the second cell receives the path switch request acknowledgment message.

S1509: The network device of the second cell sends a source cell configuration release message to the terminal.

That is, the network device of the second cell sends the source cell configuration release message to the terminal after receiving the path switch request acknowledgment message or before sending a terminal context release message to the network device of the first cell.

For example, assuming that a time period from S 1509 to S1510 is divided into three consecutive time periods T1, T2, and T3 in sequence, the network device of the second cell may send the source cell configuration release message to the terminal within T1 after receiving the path switch request acknowledgment message. Alternatively, the network device of the second cell may also send the source cell configuration release message to the terminal within T3 before sending the terminal context release message to the network device of the first cell. Alternatively, the network device of the second cell may also send the source cell configuration release message to the terminal within T2.

Correspondingly, the terminal receives the source cell configuration release message. The terminal may release a configuration in the first cell based on the source cell configuration release message.

S1510: The network device of the second cell sends the terminal context release message to the network device of the first cell.

Correspondingly, a source base station receives the terminal context release message, and releases terminal context information.

In a DAPS handover process, the network device of the second cell receives an end marker (end marker) within a time period from after the AMF performs the path switch with the UPF to before the AMF sends the path switch request acknowledgment message to the network device of the second cell. In still another possible design, in the information transmission method, the network device of the second cell may also send the source cell configuration release message to the terminal after receiving the end marker. This is not limited in this application.

In a path switch process, the UPF sends data to the network device (the source base station) of the first cell, and the network device (the source base station) of the first cell forwards the data to the network device of the second cell. After the data forwarding is completed, the UPF continues to send an end marker data packet to indicate end of the data flow.

Optionally, the solutions in the embodiments shown in FIG. 12 to FIG. 15 may also be used as subordinate solutions of the solutions in the embodiment shown in FIG. 7. That is, in the embodiments shown in FIG. 12 to FIG. 15, in the DAPS handover process, after the terminal maintains the link communication with the first cell and successfully accesses the second cell, within the foregoing time period from after S608 to S614 shown in FIG. 6, the selected occasion on which the network device of the second cell sends the source cell configuration release message to the terminal may be an occasion on which the network device of the second cell sends the first reconfiguration message including the source cell configuration release indication to the terminal in the embodiment shown in FIG. 8.

In other words, in the solutions in the embodiments shown in FIG. 12 to FIG. 15, in the DAPS handover process, after the terminal maintains the link communication with the first cell and successfully accesses the second cell, the source cell configuration release message sent by the network device of the second cell to the terminal may be the first reconfiguration message including the source cell configuration release indication that is sent by the network device of the second cell to the terminal in the embodiment shown in FIG. 8.

The foregoing mainly describes the solutions provided in the embodiments of this application from the perspective of interaction between network elements. It may be understood that, to implement the foregoing functions, the network elements such as the terminal and the network device include corresponding hardware structures and/or software modules for performing the functions.

For example, an embodiment of this application may further provide a communication apparatus that may be applied to a terminal. FIG. 16 is a schematic diagram of a structure of a communication apparatus according to an embodiment of this application.

As shown in FIG. 16, the communication apparatus may include: a receiving module 1601, configured to receive capability enquiry signaling from a network device; and a sending module 1602, configured to send capability information of a terminal to the network device. The capability information includes: a first capability item and dual active protocol stack DAPS capability information supported by the terminal and corresponding to the first capability item, and/or a second capability item and carrier aggregation CA capability information supported by the terminal and corresponding to the second capability item.

In a possible design, the capability information includes a specific parameter of each band in multiple band combinations; the DAPS capability information supported by the terminal and corresponding to the first capability item is a specific parameter of each band in one band combination of the multiple band combinations; and/or the CA capability information supported by the terminal and corresponding to the second capability item is a specific parameter of each band in one band combination of the multiple band combinations.

In a possible design, when the DAPS capability information supported by the terminal is different from the CA capability information supported by the terminal, the first capability item and the second capability item correspond to a specific parameter of each band in different band combinations.

In another possible design, when the DAPS capability information supported by the terminal is same as the CA capability information supported by the terminal, the first capability item and the second capability item correspond to a specific parameter of each band in a same band combination.

In another possible design, when the DAPS capability information supported by the terminal is the same as the CA capability information supported by the terminal, the first capability item and the second capability item may also correspond to a specific parameter of each band in different band combinations.

In a possible design, the DAPS capability information supported by the terminal and corresponding to the first capability item includes at least one of the following: an uplink DAPS capability and a downlink DAPS capability at a per band granularity, or an uplink DAPS capability and a downlink DAPS capability at a per carrier granularity.

Correspondingly, an embodiment of this application may further provide a communication apparatus that may be applied to a network device. FIG. 17 is a schematic diagram of another structure of a communication apparatus according to an embodiment of this application.

As shown in FIG. 17, the communication apparatus may include: a sending module 1701, configured to send capability enquiry signaling to a terminal; and a receiving module 1702, configured to receive capability information from the terminal. The capability information includes a first capability item and dual active protocol stack DAPS capability information supported by the terminal and corresponding to the first capability item, and/or a second capability item and CA capability information supported by the terminal and corresponding to the second capability item.

In a possible design, the capability information includes a specific parameter of each band in multiple band combinations; the DAPS capability information supported by the terminal and corresponding to the first capability item is a specific parameter of each band in one band combination of the multiple band combinations; and/or the CA capability information supported by the terminal and corresponding to the second capability item is a specific parameter of each band in one band combination of the multiple band combinations.

In a possible design, when the DAPS capability information supported by the terminal is different from the CA capability information supported by the terminal, the first capability item and the second capability item correspond to a specific parameter of each band in different band combinations.

In another possible design, when the DAPS capability information supported by the terminal is same as the CA capability information supported by the terminal, the first capability item and the second capability item correspond to a specific parameter of each band in a same band combination.

In another possible design, when the DAPS capability information supported by the terminal is the same as the CA capability information supported by the terminal, the first capability item and the second capability item may also correspond to a specific parameter of each band in different band combinations.

In a possible design, the DAPS capability information supported by the terminal and corresponding to the first capability item includes at least one of the following: an uplink DAPS capability and a downlink DAPS capability at a per band granularity, or an uplink DAPS capability and a downlink DAPS capability at a per carrier granularity.

Optionally, an embodiment of this application may further provide a communication apparatus that may be applied to a terminal. FIG. 18 is a schematic diagram of still another structure of a communication apparatus according to an embodiment of this application.

As shown in FIG. 18, the communication apparatus may include: an access module 1801, configured to maintain a link communication between a terminal and a first cell, and successfully access a second cell; a receiving module 1802, configured to receive a first reconfiguration message from a network device of the second cell; and a release module 1803, configured to release a configuration of the terminal in the first cell based on the first reconfiguration message.

In a possible design, the first reconfiguration message is the first reconfiguration message received by the receiving module 1802 from the network device of the second cell after the terminal successfully accesses the second cell.

In a possible design, the first reconfiguration message includes a source cell configuration release indication, or does not include the source cell configuration release indication.

In another possible design, the first reconfiguration message does not include a source cell configuration release indication; and the access module 1801 is further configured to keep an existing configuration in the second cell unchanged, and/or send a reconfiguration error message to the network device of the second cell.

In a possible design, in a DAPS handover process, the receiving module 1802 is further configured to receive a handover command from the network device of the first cell; and the access module 1801 is specifically configured to maintain the link communication between the terminal and the first cell based on the handover command, and successfully access the second cell.

In a possible design, the access module 1801 is specifically configured to control the terminal to synchronize with the second cell, and send a reconfiguration complete message to a network device of the second cell.

Correspondingly, an embodiment of this application may further provide a communication apparatus that may be applied to a network device. FIG. 19 is a schematic diagram of still another structure of a communication apparatus according to an embodiment of this application.

As shown in FIG. 19, the communication apparatus may include: a sending module 1901, configured to send, after a terminal successfully accesses a second cell, a first reconfiguration message to the terminal. The first reconfiguration message includes a source cell configuration release indication, the source cell configuration release indication is used for instructing the terminal to release a configuration in a first cell, and the first cell is a cell with which the terminal maintains a link communication.

In a possible design, the first reconfiguration message is the first reconfiguration message sent by the sending module 1901 to the terminal after the terminal successfully the second cell.

In a possible design, the apparatus further includes: a receiving module 1902, configured to receive a reconfiguration complete message from the terminal.

In a possible design, the sending module 1901 is specifically configured to send the first reconfiguration message to the terminal when sending a handover success indication to a network device of the first cell; or
send the first reconfiguration message to the terminal after sending the handover success indication to the network device of the first cell; or
send the first reconfiguration message to the terminal after receiving an SN status transfer indication from the network device of the first cell; or
send the first reconfiguration message to the terminal after completing data forwarding; or
send the first reconfiguration message to the terminal before sending a path switch request message; or
send the first reconfiguration message to the terminal when sending the path switch request message; or
send the first reconfiguration message to the terminal after sending the path switch request message; or
send the first reconfiguration message to the terminal after receiving an end marker; or
send the first reconfiguration message to the terminal after receiving a path switch request acknowledgment message; or
send the first reconfiguration message to the terminal before sending a terminal context release message to the network device of the first cell.

Optionally, an embodiment of this application may further provide a communication apparatus that may be applied to a terminal. FIG. 20 is a schematic diagram of still another structure of a communication apparatus according to an embodiment of this application.

As shown in FIG. 20, the communication apparatus may include: an access module 2001, configured to maintain a link communication between a terminal and a first cell, and successfully access a second cell; a receiving module 2002, configured to receive a reconfiguration message from a network device of the first cell; and the access module 2001, further configured to keep a configuration of the terminal in the first cell unchanged, or determine not to perform a reconfiguration based on the reconfiguration message.

In a possible design, the apparatus further includes: a sending module 2003, configured to send a reconfiguration error message to the network device of the first cell.

In a possible design, in a DAPS handover process, the receiving module 2002 is further configured to receive a handover command from the network device of the first cell; and the access module 2001 is specifically configured to maintain the link communication between the terminal and the first cell based on the handover command, and successfully access the second cell.

In a possible design, the access module 2001 is specifically configured to control the terminal to synchronize with the second cell, and send a reconfiguration complete message to a network device of the second cell.

Optionally, an embodiment of this application may further provide a communication apparatus that may be applied to a network device. FIG. 21 is a schematic diagram of still another structure of a communication apparatus according to an embodiment of this application.

As shown in FIG. 21, the communication apparatus may include: a sending module 2101 and a processing module 2102. The processing module 2102 may be configured to control a terminal to access a second cell, process data of the terminal, and the like. After the terminal successfully accesses the second cell, the sending module 2101 is configured to send a source cell configuration release message to the terminal when sending a handover success indication to a network device of a first cell, where the first cell is a cell with which the terminal maintains a link communication; or
send the source cell configuration release message to the terminal after sending the handover success indication to the network device of the first cell; or
send the source cell configuration release message to the terminal after receiving an SN status transfer indication from the network device of the first cell; or
send the source cell configuration release message to the terminal after completing data forwarding; or
send the source cell configuration release message to the terminal before sending a path switch request message; or
send the source cell configuration release message to the terminal when sending the path switch request message; or
send the source cell configuration release message to the terminal after sending the path switch request message; or
send the source cell configuration release message to the terminal after receiving an end marker; or
send the source cell configuration release message to the terminal after receiving a path switch request acknowledgment message; or
send the source cell configuration release message to the terminal before sending a terminal context release message to the network device of the first cell.

The source cell configuration release message is used for instructing the terminal to release a configuration in the first cell.

Optionally, an embodiment of this application further provides a communication apparatus. The communication apparatus may be applied to the foregoing network device or terminal. FIG. 22 is a schematic diagram of still another structure of a communication apparatus according to an embodiment of this application.

As shown in FIG. 22, the communication apparatus may include: a transceiver unit 2201 and a processing unit 2202. The transceiver unit 2201 may be configured to send and receive information, or configured to communicate with another network element. The processing unit 2202 may be configured to process data.

When the communication apparatus is applied to a terminal, the transceiver unit 2201 and the processing unit 2202 may be used to implement the method performed by the terminal in the foregoing embodiments.

When the communication apparatus is applied to a network device, the transceiver unit 2201 and the processing unit 2202 may be used to implement the method performed by the network device in the foregoing embodiments.

It should be understood that, division of the modules or units in the apparatus is merely logical function division. During actual implementation, all or some of the modules or units may be integrated into one physical entity, or the modules or units may be physically separate. In addition, all the units in the apparatus may be implemented by using software invoked by a processing element, or may be implemented by using hardware; or some units may be implemented by using software invoked by a processing element, and some units may be implemented by using hardware.

For example, each unit may be a separately disposed processing element, or may be integrated into a chip of the apparatus for implementation. In addition, each unit may be stored in a memory in a form of a program, and a processing element of the apparatus invokes and executes a function of the unit. In addition, all or some of the units may be integrated together, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, any one of the foregoing units in the apparatus may be one or more integrated circuits configured to implement the foregoing methods, for example, one or more ASICs, one or more DSPs, one or more FPGAs, or a combination of at least two of the integrated circuit forms.

For another example, when the unit in the apparatus may be implemented in a form of a program invoked by a processing element, the processing element may be a general-purpose processor, for example, a CPU or another processor that can invoke the program. For another example, the units may be integrated together and implemented in a form of a system-on-a-chip (system-on-a-chip, SOC).

The foregoing unit for receiving is an interface circuit or an input circuit of the apparatus, and is configured to receive a signal from another apparatus. For example, when the apparatus is implemented by using a chip, the receiving unit is an interface circuit or an input circuit used by the chip to receive a signal from another chip or apparatus. When the communication apparatus includes a unit for sending, the unit for sending is an interface circuit or an output circuit of the apparatus, and is configured to send a signal to another apparatus. For example, when the apparatus is implemented by using a chip, the sending unit is an interface circuit or an output circuit used by the chip to send a signal to another chip or apparatus.

For example, an embodiment of this application may further provide a communication apparatus that may be applied to the foregoing network device or terminal. The communication apparatus may include: a processor and an interface circuit. There may be one or more processors. When the communication apparatus is applied to a network device, the processor is configured to communicate with another apparatus through the interface circuit, and perform the steps performed by the network device in the foregoing method. When the communication apparatus is applied to a terminal, the processor is configured to communicate with another apparatus through the interface circuit, and perform the steps performed by the terminal in the foregoing method.

In an implementation, units used by the network device or the terminal to separately implement corresponding steps in the foregoing method may be implemented in a form of scheduling a program by a processing element. For example, the apparatus applied to the network device or the terminal may include a processing element and a storage element. The processing element invokes a program stored in the storage element, to perform the method performed by the corresponding network device or terminal in the foregoing method embodiments. The storage element may be a storage element located on a same chip as the processing element, namely, an on-chip storage element.

In another implementation, the program used to perform the method performed by the network device or the terminal in the foregoing methods may be in a storage element located on a chip different from that of the processing element, namely, an off-chip storage element. In this case, the processing element invokes or loads a program in the on-chip storage element from the off-chip storage element, to invoke and perform the method performed by the corresponding network device or terminal in the foregoing method embodiments.

For example, an embodiment of this application may further provide a communication apparatus. The communication apparatus may include a processor, configured to execute computer instructions stored in a memory. When the computer instructions are executed, the apparatus is enabled to perform the foregoing method performed by the network device or the terminal. The memory may be located inside the communication apparatus, or may be located outside the communication apparatus. There are one or more processors.

In an implementation, units used by the network device or the terminal to implement the steps in the foregoing method may be configured as one or more processing elements, the processing elements may be disposed on the corresponding network device or terminal, and the processing elements herein may be integrated circuits, for example, one or more ASICs, one or more DSPs, one or more FPGAs, or a combination of these types of integrated circuits. The integrated circuits may be integrated together to form a chip.

The units used by the network device or the terminal to implement the steps in the foregoing method may be integrated together, and implemented in a form of an SOC. The SOC chip is configured to implement the corresponding method. At least one processing element and storage element may be integrated into the chip, and the processing element invokes a program stored in the storage element to implement the corresponding method. Alternatively, at least one integrated circuit may be integrated into the chip, to implement the corresponding method. Alternatively, with reference to the foregoing implementations, functions of a part of units may be implemented by invoking a program by the processing element, and functions of a part of units may be implemented by the integrated circuit.

As described above, the processing element herein may be a general-purpose processor, for example, a CPU, or may be one or more integrated circuits, for example, one or more ASICs, one or more DSPs, one or more FPGAs, or a combination of at least two of these types of integrated circuits, configured to implement the foregoing method.

The storage element may be one memory, or may be a general term of multiple storage elements.

For example, an embodiment of this application further provides a chip system, and the chip system may be applied to the foregoing network device or terminal. The chip system includes one or more interface circuits and one or more processors; the interface circuits and the processors are interconnected through lines; and the processors receive and execute computer instructions from a memory of an electronic device through the interface circuits, to implement the method performed by the corresponding network device or the terminal in the foregoing method embodiments.

Through the descriptions of the foregoing implementations, a person skilled in the art may clearly understand that, for the purpose of convenient and brief description, division of the foregoing functional modules is merely used as an example for description. In actual application, the foregoing functions may be allocated to and completed by different functional modules according to requirements. That is, an internal structure of an apparatus is divided into different functional modules to complete all or some of the functions described above.

In the several embodiments provided in this application, it should be understood that the disclosed apparatuses and methods may be implemented in other manners. For example, the described apparatus embodiments are merely examples. For example, division into the modules or units is merely logical function division, and may be other division during actual implementation. For example, multiple units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, that is, may be located in one place, or may be distributed in multiple different places. Some or all of the units may be selected based on actual requirements to achieve the objectives of the solutions of the embodiments.

In addition, functional units in the embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in a form of a software product, for example, a program. The software product is stored in a program product, for example, a computer-readable storage medium, and includes several instructions for instructing a device (which may be a single-chip microcomputer, a chip, or the like) or a processor (processor) to perform all or some of the steps of the methods described in the embodiments of this application. The foregoing storage medium includes any medium that can store program code, such as a USB flash drive, a removable hard disk, a ROM, a RAM, a magnetic disk, or an optical disc.

For example, an embodiment of this application may further provide a computer-readable storage medium, including computer software instructions. When the computer software instructions run in a network device or a chip built in a network device, the network device is enabled to perform the method performed by the network device in the foregoing embodiments.

Alternatively, when the computer software instructions run in a terminal or a chip built in a terminal, the terminal is enabled to perform the method performed by the terminal in the foregoing embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An information transmission method, comprising:
receiving, by a terminal, capability enquiry signaling from a network device; and
sending, by the terminal, capability information of the terminal to the network device, wherein the capability information comprises: a first capability item and dual active protocol stack DAPS capability information supported by the terminal and corresponding to the first capability item, and/or a second capability item and carrier aggregation CA capability information supported by the terminal and corresponding to the second capability item.

2. The method according to claim 1, wherein the capability information comprises a specific parameter of each band in multiple band combinations;
the DAPS capability information supported by the terminal and corresponding to the first capability item is a specific parameter of each band in one band combination of the multiple band combinations; and/or
the CA capability information supported by the terminal and corresponding to the second capability item is a specific parameter of each band in one band combination of the multiple band combinations.

3. The method according to claim 2, wherein when the DAPS capability information supported by the terminal is different from the CA capability information supported by the terminal, the first capability item and the second capability item correspond to a specific parameter of each band in different band combinations.

4. The method according to claim 2 or 3, wherein when the DAPS capability information supported by the terminal is same as the CA capability information supported by the terminal, the first capability item and the second capability item correspond to a specific parameter of each band in a same band combination.

5. The method according to any one of claims 2 to 4, wherein the DAPS capability information supported by the terminal and corresponding to the first capability item comprises at least one of the following: an uplink DAPS capability and a downlink DAPS capability at a per band granularity, or an uplink DAPS capability and a downlink DAPS capability at a per carrier granularity.

6. An information transmission method, comprising:
sending, by a network device, capability enquiry signaling to a terminal; and
receiving, by the network device, capability information from the terminal, wherein the capability information comprises a first capability item and dual active protocol stack DAPS capability information supported by the terminal and corresponding to the first capability item, and/or a second capability item and CA capability information supported by the terminal and corresponding to the second capability item.

7. The method according to claim 6, wherein the capability information comprises a specific parameter of each band in multiple band combinations;
the DAPS capability information supported by the terminal and corresponding to the first capability item is a specific parameter of each band in one band combination of the multiple band combinations; and/or
the CA capability information supported by the terminal and corresponding to the second capability item is a specific parameter of each band in one band combination of the multiple band combinations.

8. The method according to claim 7, wherein when the DAPS capability information supported by the terminal is different from the CA capability information supported by the terminal, the first capability item and the second capability item correspond to a specific parameter of each band in different band combinations.

9. The method according to claim 7 or 8, wherein when the DAPS capability information supported by the terminal is same as the CA capability information supported by the terminal, the first capability item and the second capability item correspond to a specific parameter of each band in a same band combination.

10. The method according to any one of claims 7 to 9, wherein the DAPS capability information supported by the terminal and corresponding to the first capability item comprises at least one of the following: an uplink DAPS capability and a downlink DAPS capability at a per band granularity, or an uplink DAPS capability and a downlink DAPS capability at a per carrier granularity.

11. An information transmission method, comprising:
maintaining, by a terminal, a link communication with a first cell, and successfully accessing a second cell;
receiving, by the terminal, a first reconfiguration message from a network device of the second cell; and
releasing, by the terminal, a configuration of the terminal in the first cell based on the first reconfiguration message.

12. The method according to claim 11, wherein the first reconfiguration message is the first reconfiguration message received by the terminal from the network device of the second cell after the terminal successfully accesses the second cell.

13. The method according to claim 11 or 12, wherein the first reconfiguration message comprises a source cell configuration release indication, or does not comprise the source cell configuration release indication.

14. The method according to claim 11 or 12, wherein the first reconfiguration message does not comprise a source cell configuration release indication; and the method further comprises:
keeping, by the terminal, an existing configuration in the second cell unchanged, and/or sending a reconfiguration error message to the network device of the second cell.

15. The method according to any one of claims 11 to 14, wherein the maintaining, by a terminal, a link communication with a first cell, and successfully accessing a second cell comprises:
receiving, by the terminal in a DAPS handover process, a handover command from a network device of the first cell; and
maintaining, by the terminal, the link communication with the first cell based on the handover command, and successfully accessing the second cell.

16. The method according to any one of claims 11 to 15, wherein the successfully accessing, by a terminal, a second cell comprises:
synchronizing, by the terminal, with the second cell, and sending a reconfiguration complete message to the network device of the second cell.

17. An information transmission method, comprising:
sending, by a network device of a second cell after a terminal successfully accesses the second cell, a first reconfiguration message to the terminal, wherein the first reconfiguration message comprises a source cell configuration release indication, the source cell configuration release indication is used for instructing the terminal to release a configuration in a first cell, and the first cell is a cell with which the terminal maintains a link communication.

18. The method according to claim 17, wherein the first reconfiguration message is the first reconfiguration message sent by the network device of the second cell to the terminal after the terminal successfully accesses the second cell.

19. The method according to claim 17 or 18, wherein before the sending, by a network device of a second cell, a first reconfiguration message to the terminal, the method further comprises:
receiving, by the network device of the second cell, a reconfiguration complete message from the terminal.

20. The method according to any one of claims 17 to 19, wherein the sending, by a network device of a second cell, a first reconfiguration message to the terminal comprises:
sending, by the network device of the second cell, the first reconfiguration message to the terminal when sending a handover success indication to a network device of the first cell; or
sending, by the network device of the second cell, the first reconfiguration message to the terminal after sending the handover success indication to the network device of the first cell; or
sending, by the network device of the second cell, the first reconfiguration message to the terminal after receiving an SN status transfer indication from the network device of the first cell; or
sending, by the network device of the second cell, the first reconfiguration message to the terminal after completing data forwarding; or
sending, by the network device of the second cell, the first reconfiguration message to the terminal before sending a path switch request message; or
sending, by the network device of the second cell, the first reconfiguration message to the terminal when sending the path switch request message; or
sending, by the network device of the second cell, the first reconfiguration message to the terminal after sending the path switch request message; or
sending, by the network device of the second cell, the first reconfiguration message to the terminal after receiving an end marker; or
sending, by the network device of the second cell, the first reconfiguration message to the terminal after receiving a path switch request acknowledgment message; or
sending, by the network device of the second cell, the first reconfiguration message to the terminal before sending a terminal context release message to the network device of the first cell.

21. An information transmission method, comprising:
maintaining, by a terminal, a link communication with a first cell, and successfully accessing a second cell;
receiving, by the terminal, a reconfiguration message from a network device of the first cell; and
keeping, by the terminal, a configuration in the first cell unchanged, or determining not to perform a reconfiguration based on the reconfiguration message.

22. The method according to claim 21, further comprising:
sending, by the terminal, a reconfiguration error message to the network device of the first cell.

23. The method according to claim 21 or 22, wherein the maintaining, by a terminal, a link communication with a first cell, and successfully accessing a second cell comprises:
receiving, by the terminal in a DAPS handover process, a handover command from the network device of the first cell; and
maintaining, by the terminal, the link communication with the first cell based on the handover command, and successfully accessing the second cell.

24. The method according to any one of claims 21 to 23, wherein the successfully accessing, by a terminal, a second cell comprises:
synchronizing, by the terminal, with the second cell, and sending a reconfiguration complete message to a network device of the second cell.

25. An information transmission apparatus, applied to a terminal, the apparatus comprising:
a receiving module, configured to receive capability enquiry signaling from a network device; and
a sending module, configured to send capability information of the terminal to the network device, wherein the capability information comprises: a first capability item and dual active protocol stack DAPS capability information supported by the terminal and corresponding to the first capability item, and/or a second capability item and carrier aggregation CA capability information supported by the terminal and corresponding to the second capability item.

26. The apparatus according to claim 25, wherein the capability information comprises a specific parameter of each band in multiple band combinations;
the DAPS capability information supported by the terminal and corresponding to the first capability item is a specific parameter of each band in one band combination of the multiple band combinations; and/or
the CA capability information supported by the terminal and corresponding to the second capability item is a specific parameter of each band in one band combination of the multiple band combinations.

27. The apparatus according to claim 26, wherein when the DAPS capability information supported by the terminal is different from the CA capability information supported by the terminal, the first capability item and the second capability item correspond to a specific parameter of each band in different band combinations.

28. The apparatus according to claim 26 or 27, wherein when the DAPS capability information supported by the terminal is same as the CA capability information supported by the terminal, the first capability item and the second capability item correspond to a specific parameter of each band in a same band combination.

29. The apparatus according to any one of claims 26 to 28, wherein the DAPS capability information supported by the terminal and corresponding to the first capability item comprises at least one of the following: an uplink DAPS capability and a downlink DAPS capability at a per band granularity, or an uplink DAPS capability and a downlink DAPS capability at a per carrier granularity.

30. An information transmission apparatus, applied to a network device, the apparatus comprising:
a sending module, configured to send capability enquiry signaling to a terminal; and
a receiving module, configured to receive capability information from the terminal, wherein the capability information comprises a first capability item and dual active protocol stack DAPS capability information supported by the terminal and corresponding to the first capability item, and/or a second capability item and CA capability information supported by the terminal and corresponding to the second capability item.

31. The apparatus according to claim 30, wherein the capability information comprises a specific parameter of each band in multiple band combinations;
the DAPS capability information supported by the terminal and corresponding to the first capability item is a specific parameter of each band in one band combination of the multiple band combinations; and/or
the CA capability information supported by the terminal and corresponding to the second capability item is a specific parameter of each band in one band combination of the multiple band combinations.

32. The apparatus according to claim 31, wherein when the DAPS capability information supported by the terminal is different from the CA capability information supported by the terminal, the first capability item and the second capability item correspond to a specific parameter of each band in different band combinations.

33. The apparatus according to claim 31 or 32, wherein when the DAPS capability information supported by the terminal is same as the CA capability information supported by the terminal, the first capability item and the second capability item correspond to a specific parameter of each band in a same band combination.

34. The apparatus according to any one of claims 31 to 33, wherein the DAPS capability information supported by the terminal and corresponding to the first capability item comprises at least one of the following: an uplink DAPS capability and a downlink DAPS capability at a per band granularity, or an uplink DAPS capability and a downlink DAPS capability at a per carrier granularity.

35. An information transmission apparatus, applied to a terminal, the apparatus comprising:
an access module, configured to maintain a link communication between the terminal and a first cell, and successfully access a second cell;
a receiving module, configured to receive a first reconfiguration message from a network device of the second cell; and
a release module, configured to release a configuration of the terminal in the first cell based on the first reconfiguration message.

36. The apparatus according to claim 35, wherein the first reconfiguration message is the first reconfiguration message received by the receiving module from the network device of the second cell after the terminal successfully accesses the second cell.

37. The apparatus according to claim 35 or 36, wherein the first reconfiguration message comprises a source cell configuration release indication, or does not comprise the source cell configuration release indication.

38. The apparatus according to claim 35 or 36, wherein the first reconfiguration message does not comprise a source cell configuration release indication; and
the access module is further configured to keep an existing configuration in the second cell unchanged, and/or send a reconfiguration error message to the network device of the second cell.

39. The apparatus according to any one of claims 35 to 38, wherein in a DAPS handover process, the receiving module is further configured to receive a handover command from a network device of the first cell; and
the access module is specifically configured to maintain the link communication between the terminal and the first cell based on the handover command, and successfully access the second cell.

40. The apparatus according to any one of claims 35 to 39, wherein the access module is specifically configured to control the terminal to synchronize with the second cell, and send a reconfiguration complete message to the network device of the second cell.

41. An information transmission apparatus, comprising:
a sending module, configured to send, after a terminal successfully accesses the second cell, a first reconfiguration message to the terminal, wherein the first reconfiguration message comprises a source cell configuration release indication, the source cell configuration release indication is used for instructing the terminal to release a configuration in a first cell, and the first cell is a cell with which the terminal maintains a link communication.

42. The apparatus according to claim 41, wherein the first reconfiguration message is the first reconfiguration message sent by the sending module to the terminal after the terminal successfully accesses the second cell.

43. The apparatus according to claim 41 or 42, further comprising:
a receiving module, configured to receive a reconfiguration complete message from the terminal.

44. The apparatus according to any one of claims 41 to 43, wherein the sending module is specifically configured to send the first reconfiguration message to the terminal when sending a handover success indication to a network device of the first cell; or
send the first reconfiguration message to the terminal after sending the handover success indication to the network device of the first cell; or
send the first reconfiguration message to the terminal after receiving an SN status transfer indication from the network device of the first cell; or
send the first reconfiguration message to the terminal after completing data forwarding; or
send the first reconfiguration message to the terminal before sending a path switch request message; or
send the first reconfiguration message to the terminal when sending the path switch request message; or
send the first reconfiguration message to the terminal after sending the path switch request message; or
send the first reconfiguration message to the terminal after receiving an end marker; or
send the first reconfiguration message to the terminal after receiving a path switch request acknowledgment message; or
send the first reconfiguration message to the terminal before sending a terminal context release message to the network device of the first cell.

45. An information transmission apparatus, applied to a terminal, the apparatus comprising:
an access module, configured to maintain a link communication between the terminal and a first cell, and successfully access a second cell;
a receiving module, configured to receive a reconfiguration message from a network device of the first cell; and
the access module, further configured to keep a configuration of the terminal in the first cell unchanged, or determine not to perform a reconfiguration based on the reconfiguration message.

46. The apparatus according to claim 45, further comprising:
a sending module, configured to send a reconfiguration error message to the network device of the first cell.

47. The apparatus according to claim 45 or 46, wherein in a DAPS handover process, the receiving module is further configured to receive a handover command from the network device of the first cell; and
the access module is specifically configured to maintain the link communication between the terminal and the first cell based on the handover command, and successfully access the second cell.

48. The apparatus according to any one of claims 45 to 47, wherein the access module is specifically configured to control the terminal to synchronize with the second cell, and send a reconfiguration complete message to a network device of the second cell.

49. A communication apparatus, comprising: a processor, configured to execute computer instructions stored in a memory, the computer instructions, when being executed, enabling the apparatus to perform the method according to any one of claims 1 to 5.

50. A communication apparatus, comprising: a processor, configured to execute computer instructions stored in a memory, the computer instructions, when being executed, enabling the apparatus to perform the method according to any one of claims 6 to 10.

51. A communication apparatus, comprising: a processor, configured to execute computer instructions stored in a memory, the computer instructions, when being executed, enabling the apparatus to perform the method according to any one of claims 11 to 16 or the method according to any one of claims 21 to 24.

52. A communication apparatus, comprising: a processor, configured to execute computer instructions stored in a memory, the computer instructions, when being executed, enabling the apparatus to perform the method according to any one of claims 17 to 20.

53. A communication apparatus, comprising: a processor and an interface circuit, wherein the processor is configured to communicate with another apparatus through the interface circuit, and perform the method according to any one of claims 1 to 5.

54. A communication apparatus, comprising: a processor and an interface circuit, wherein the processor is configured to communicate with another apparatus through the interface circuit, and perform the method according to any one of claims 6 to 10.

55. A communication apparatus, comprising: a processor and an interface circuit, wherein the processor is configured to communicate with another apparatus through the interface circuit, and perform the method according to any one of claims 11 to 16 or the method according to any one of claims 21 to 24.

56. A communication apparatus, comprising: a processor and an interface circuit, wherein the processor is configured to communicate with another apparatus through the interface circuit, and perform the method according to any one of claims 17 to 20.

57. A computer-readable storage medium, comprising computer software instructions, wherein
when the computer software instructions run in a terminal or a chip built in a terminal, the terminal is enabled to perform the method according to any one of claims 1 to 5.

58. A computer-readable storage medium, comprising computer software instructions, wherein
when the computer software instructions run in a network device or a chip built in a network device, the network device is enabled to perform the method according to any one of claims 6 to 10.

59. A computer-readable storage medium, comprising computer software instructions, wherein
when the computer software instructions run in a terminal or a chip built in a terminal, the terminal is enabled to perform the method according to any one of claims 11 to 16 or the method according to any one of claims 21 to 24.

60. A computer-readable storage medium, comprising computer software instructions, wherein
when the computer software instructions run in a network device or a chip built in a network device, the network device is enabled to perform the method according to any one of claims 17 to 20.

61. A communication system, comprising: a network device and a terminal, wherein
the terminal performs the method according to any one of claims 1 to 5; and
the network device performs the method according to any one of claims 6 to 10.

62. A communication system, comprising: a network device and a terminal, wherein
the terminal performs the method according to any one of claims 11 to 16, and the network device performs the method according to any one of claims 17 to 20; or
the terminal performs the method according to any one of claims 21 to 24.
